# EUROPEAN PATENT APPLICATION

(11) **EP 4 757 409 A1**
(43) Date of publication of application: **10.06.2026**
(21) Application number: 24858140.7
(22) Date of filing: 22.07.2024
(51) Int. Cl.: H04W 28/20

(54) **METHOD AND APPARATUS FOR DETERMINING BANDWIDTH**

(30) Priority: 31.08.2023 CN 202311137193
(71) Applicant: HUAWEI TECHNOLOGIES CO., LTD., Shenzhen 518129 (CN)
(72) Inventor: QU, Weilin, Shenzhen, Guangdong 518129 (CN); WU, Yiling, Shenzhen, Guangdong 518129 (CN); JIN, Zhe, Shenzhen, Guangdong 518129 (CN); LUO, Zhihu, Shenzhen, Guangdong 518129 (CN)
(74) Representative: Pfenning, Meinig & Partner mbB
(86) International application number: PCT/CN2024/106786
(87) International publication number: WO 2025/044596

(57) **Abstract**

A bandwidth determining method and an apparatus are provided, including: When a maximum transmission bandwidth of a terminal is determined, the maximum transmission bandwidth of the terminal is associated with a type of the terminal, so that the maximum transmission bandwidth of the terminal matches the type of the terminal, and a minimum guard bandwidth of the terminal matches the type of the terminal. In this way, problems such as a waste of frequency domain resources and/or interference to other information transmitted in an adjacent frequency domain resource caused by setting maximum transmission bandwidths and minimum guard bandwidths of all types of terminals to fixed values for one channel bandwidth can be resolved.

## Description

### CROSS-REFERENCE TO RELATED APPLICATIONS

This application claims priority to Chinese Patent Application No. 202311137193.0, filed with the China National Intellectual Property Administration on August 31, 2023 and entitled "BANDWIDTH DETERMINING METHOD AND APPARATUS", which is incorporated herein by reference in its entirety.

### TECHNICAL FIELD

Embodiments of this application relate to the field of communication technologies, and in particular, to a bandwidth determining method and an apparatus.

### BACKGROUND

In a new radio (new radio, NR) system and a long term evolution (long term evolution, LTE) system, configurations of a maximum transmission bandwidth and a minimum guard bandwidth that are defined within a channel bandwidth of a terminal are both fixed values. For example, for a narrow band-internet of things (narrow band-internet of things, NB-IoT) terminal in LTE, a channel bandwidth of the terminal is defined as 200 kHz. According to a protocol, within the 200 kHz channel bandwidth, a maximum transmission bandwidth of the terminal is defined as 180 kHz, and a minimum guard bandwidth on each of both sides of the maximum transmission bandwidth is defined as 10 kHz.

For an ambient internet of things (ambient IoT, A-IoT) terminal to be introduced into NR, different types of A-IoT terminals have different requirements on tolerable frequency errors. For example, for a backscatter-based A-IoT terminal, when a signal transmission bandwidth is approximately 180 kHz, a maximum tolerable frequency error of the terminal is 7% of the signal transmission bandwidth. In this case, a maximum value of a tolerable frequency error of a signal is approximately 10 kHz to 15 kHz. For an active A-IoT terminal, a maximum value of a tolerable frequency error of the active terminal is approximately equal to 5 to 10 parts per million (parts per million, ppm), and is far greater than a maximum value of 0.1 ppm of a tolerable frequency error of a legacy NR active terminal. In this case, when a carrier center frequency is 900 MHz, frequency offset tolerance of the active terminal is 9 kHz (900 MHz*10 ppm). Because different types of A-IoT terminals have different tolerable frequency offsets and different frequency offset calibration capabilities, minimum guard bandwidths required by the A-IoT terminals are also different, and corresponding maximum transmission bandwidths within channel bandwidths are also different. How to configure corresponding maximum transmission bandwidths for different types of A-IoT terminals to meet maximum transmission efficiency of the different types of A-IoT terminals is an urgent problem to be resolved.

### SUMMARY

Embodiments of this application provide a bandwidth determining method and an apparatus, to determine maximum transmission bandwidths of different types of terminals.

According to a first aspect, a bandwidth determining method is provided. The method is performed by a terminal or a unit (for example, a chip or a circuit) in the terminal, and includes: determining a maximum transmission bandwidth of the terminal in a case of a first channel bandwidth and a first subcarrier spacing, where in a case of the first channel bandwidth and the first subcarrier spacing, the maximum transmission bandwidth of the terminal is associated with a type of the terminal, and the first channel bandwidth includes the maximum transmission bandwidth and a minimum guard bandwidth; and performing signal transmission with an access network device based on the maximum transmission bandwidth of the terminal.

It may be understood that, in the descriptions of this specification, a frequency error of a terminal that has a capability of generating an uplink carrier signal is a carrier frequency error, and a frequency error of a terminal that has a capability of reflecting a downlink carrier signal and that has no capability of generating an uplink carrier is a frequency error of a signal.

In the descriptions of this specification, the terminal that has the capability of reflecting a downlink carrier signal and that has no capability of generating an uplink carrier signal may also be referred to as a terminal that has only a capability of reflecting a downlink carrier signal, a terminal that has no capability of producing an uplink carrier signal, a terminal that has no capability of generating an uplink carrier signal, or a terminal that has only a backscatter capability.

In the descriptions of this specification, the terminal that has the capability of generating an uplink carrier signal may also be referred to as a terminal that has a capability of producing an uplink carrier signal.

According to the foregoing design, different types of terminals have different requirements on maximum values of tolerable frequency errors of the terminals. A maximum transmission bandwidth that matches a requirement on the maximum value of the tolerable frequency error of the terminal is determined based on the type of the terminal. For example, for a terminal that has a relaxed requirement on a maximum frequency error (in other words, a maximum value of a frequency error is large), a large minimum guard bandwidth and a small maximum transmission bandwidth need to be configured. Correspondingly, the terminal has a weak frequency error calibration capability. For a terminal that has a strict requirement on a maximum tolerable frequency error (in other words, a maximum value of a frequency error value is small), a small minimum guard bandwidth and a large maximum transmission bandwidth need to be configured. Correspondingly, the terminal has a strong frequency error calibration capability.

In a design, the type of the terminal includes: a terminal that has a capability of generating an uplink carrier signal, or a terminal (for example, a backscatter terminal) that has a capability of reflecting a downlink carrier signal and that has no capability of generating an uplink carrier signal. Further, the terminal that has the capability of generating an uplink carrier signal includes a terminal (for example, a legacy terminal) whose maximum value of a frequency error is equal to X and a terminal (for example, an active A-IoT terminal) whose maximum value of the frequency error is greater than X. X is a non-negative number. For example, a value of X is equal to 0.1 parts per million ppm.

Optionally, the terminal that has the capability of generating an uplink carrier signal has a stricter requirement on a maximum value of a frequency error than the terminal that has the capability of reflecting a downlink carrier signal and that has no capability of generating an uplink carrier signal. Therefore, in a case of a same terminal channel bandwidth and subcarrier spacing, a maximum transmission bandwidth corresponding to the terminal that has the capability of generating an uplink carrier signal is greater than a maximum transmission bandwidth corresponding to a terminal that has the capability of reflecting a downlink carrier signal and that has no capability of generating an uplink carrier signal.

According to the foregoing design, different maximum transmission bandwidth configurations are defined for different types of A-IoT terminals in a case of the same channel bandwidth, to enable an A-IoT terminal of each type or with each capability to maximize transmission efficiency of the terminal, and to minimize interference to transmission of another terminal caused by signal transmission with a frequency error.

Optionally, a smaller maximum value of the frequency error indicates a stronger frequency offset calibration capability of the terminal, and a larger transmission bandwidth needs to be configured. Therefore, in a design, for the terminal that has the capability of generating an uplink carrier, a maximum transmission bandwidth corresponding to the terminal whose maximum value of the frequency error is equal to X is greater than a maximum transmission bandwidth corresponding to the terminal whose maximum value of the frequency error is greater than X.

In a design, the maximum transmission bandwidth of the terminal includes a maximum downlink transmission bandwidth of the terminal and a maximum uplink transmission bandwidth of the terminal, and the maximum uplink transmission bandwidth of the terminal is greater than the maximum downlink transmission bandwidth of the terminal.

According to the foregoing design, when accessing a network, the terminal first receives a downlink signal. The downlink signal may be a synchronization signal or another broadcast signal. After the terminal receives the downlink signal, the terminal may perform frequency error calibration based on the downlink signal. After the frequency error calibration, the maximum value of the frequency error of the terminal decreases. Therefore, compared with a downlink, a larger maximum transmission bandwidth may be supported in an uplink. In this design, the maximum uplink transmission bandwidth is greater than the maximum downlink transmission bandwidth. Compared with a case in which the maximum uplink transmission bandwidth and the maximum downlink transmission bandwidth are configured to be the same, uplink resource utilization can be improved.

According to a second aspect, a peer end corresponding to the first aspect is provided. For beneficial effects, refer to the descriptions of the first aspect. A bandwidth determining method is provided. The method is performed by an access network device or a unit (a chip, a circuit, or the like) in the access network device, and includes: determining a maximum transmission bandwidth of a terminal in a case of a first channel bandwidth and a first subcarrier spacing, where in a case of the first channel bandwidth and the first subcarrier spacing, the maximum transmission bandwidth of the terminal is associated with a type of the terminal, and the first channel bandwidth includes the maximum transmission bandwidth and the minimum guard bandwidth; and performing signal transmission with the terminal based on the maximum transmission bandwidth of the terminal.

In a design, the type of the terminal includes: a terminal that has a capability of generating an uplink carrier signal, or a terminal that has a capability of reflecting a downlink carrier signal and that has no capability of generating an uplink carrier signal. Further, the terminal that has the capability of generating an uplink carrier signal includes a terminal whose maximum value of a frequency error is equal to X and a terminal whose maximum value of the frequency error is greater than X. X is a non-negative number. For example, a value of X is equal to 0.1 parts per million ppm.

In a design, a maximum transmission bandwidth corresponding to the terminal that has the capability of generating an uplink carrier signal is greater than a maximum transmission bandwidth corresponding to the terminal that has the capability of reflecting a downlink carrier signal and that has no capability of generating an uplink carrier signal. Different maximum transmission bandwidth configurations are defined for different types of A-IoT terminals in a case of a same channel bandwidth, to enable an A-IoT terminal of each type or with each capability, to maximize transmission efficiency of the terminal, and to avoid interference to transmission of another terminal caused by signal transmission with a frequency error.

In a design, a maximum transmission bandwidth corresponding to the terminal whose maximum value of the frequency error is equal to X is greater than a maximum transmission bandwidth corresponding to the terminal whose maximum value of the frequency error is greater than X.

In a design, the maximum transmission bandwidth of the terminal includes a maximum downlink transmission bandwidth of the terminal and a maximum uplink transmission bandwidth of the terminal, and the maximum uplink transmission bandwidth of the terminal is greater than the maximum downlink transmission bandwidth of the terminal.

In a design, the maximum transmission bandwidth and the minimum guard bandwidth of the terminal are associated with a frequency band of the terminal. A higher frequency value corresponding to the frequency band indicates a smaller maximum transmission bandwidth and a larger minimum guard bandwidth of the terminal. Optionally, the minimum guard bandwidth is in a proportional relationship with a carrier frequency, a carrier center frequency, a start frequency of a frequency band, or a cut-off frequency of the frequency band.

According to a third aspect, a bandwidth determining method is provided. The method is performed by a terminal or a unit (a chip, a circuit, or the like) in the terminal, and includes: sending a first uplink signal to an access network device on a first uplink channel; and sending a second uplink signal to the access network device on a second uplink channel, where a maximum signal bandwidth of the second uplink signal is greater than a maximum signal bandwidth of the first uplink signal.

Optionally, the maximum signal bandwidth may also be referred to as a configurable maximum signal bandwidth, a maximum signal bandwidth that can be configured, an indicated maximum signal bandwidth, a maximum signal bandwidth that can be indicated, or the like. In addition, the maximum signal bandwidth may also be referred to as a maximum signal bandwidth in a configurable maximum signal bandwidth set or a maximum signal bandwidth in an indicated maximum signal bandwidth set.

Optionally, modulation schemes of the first uplink signal and the second uplink signal may be on-off keying OOK, amplitude shift keying ASK, frequency shift keying FSK, or binary phase keying BPSK modulation.

According to the foregoing design, maximum signal bandwidths configured for different uplink signals are different. For example, the terminal first sends the first uplink signal, and then sends the second uplink signal. The maximum signal bandwidth configured for the second uplink signal is greater than the maximum signal bandwidth configured for the first uplink signal. Compared with a design in which the maximum signal bandwidth configured for the second uplink signal is the same as the maximum signal bandwidth configured for the first uplink signal, transmission efficiency and frequency domain resource utilization of different uplink transmission phases, different uplink channels, and uplink transmission of different uplink signals can be improved.

In a design, a maximum value of a frequency error of the first uplink signal is a first value, a maximum value of a frequency error of the second uplink signal is a second value, and the second value is less than the first value.

In a design, the method further includes: receiving a first downlink signal from the access network device on a first downlink channel, where the first downlink signal includes frequency adjustment information. For example, sending the second uplink signal to the access network device on the second uplink channel includes: performing frequency adjustment based on the frequency adjustment information; and sending the second uplink signal to the access network device on the second uplink channel.

In a design, the first uplink signal is a signal that carries a message 1 in a random access procedure, and the second uplink signal is a signal that carries a message 3 or a message after the message 3 in the random access procedure. The first uplink channel is a physical random access channel PRACH, and the second uplink channel is a physical uplink shared channel PUSCH or a physical uplink control channel PUCCH.

According to the foregoing design, frequency calibration is performed by using a signal on the PRACH in a 1^{st} step of random access as a reference signal, so that transmission efficiency and frequency domain resource utilization can be further improved during subsequent data transmission for the message 3 and the message after the message 3.

In a design, the first uplink signal is a signal that carries the message 3 in the random access procedure, and the second uplink signal is a signal that carries a message after the message 3, for example, an uplink signal that carries an acknowledgment (acknowledgment, ACK) or a negative acknowledgment (negative acknowledgment, NACK) of a message 4 or an uplink signal that carries a message 5. The first uplink channel is a physical uplink shared channel PUSCH. In addition, when the second uplink signal is the uplink signal that carries the message 4, the second uplink channel is a physical uplink control channel PUCCH. When the second uplink signal is the uplink signal that carries the message 5, the second uplink channel is a physical uplink shared channel PUSCH.

In the foregoing design, frequency adjustment for short message transmission during random access is performed, so that transmission efficiency and frequency domain resource utilization can be further improved when an uplink signal with potentially longer signal transmission duration is transmitted subsequently.

In a design, the first uplink signal is a synchronization signal or a reference signal, and the second uplink signal is a signal that carries uplink data information or a signal that carries uplink control information. The synchronization signal or the reference signal is a synchronization signal or a reference signal of the second uplink signal. Alternatively, this may be described as the synchronization signal or the reference signal being associated with the second uplink signal. In addition, the synchronization signal or the reference signal is used by the access network device to perform time synchronization with the terminal. The first uplink channel is a PUSCH, and the second uplink channel is a PUSCH or a PUCCH.

According to the foregoing design, a reference signal or a synchronization signal having shorter transmission duration is detected and frequency adjustment is performed, so that transmission efficiency and frequency domain resource utilization can be further improved when an uplink data signal having potentially longer transmission duration is transmitted subsequently.

In a design, the method further includes: determining a maximum signal bandwidth of the first uplink signal of the terminal and a maximum signal bandwidth of the second uplink signal of the terminal based on a type of the terminal. For example, a maximum transmission bandwidth of the terminal is determined based on the type of the terminal, and the maximum signal bandwidth of the first uplink signal and the maximum signal bandwidth of the second uplink signal are less than or equal to the maximum transmission bandwidth of the terminal.

In a design, the type of the terminal includes: a terminal that has a capability of generating an uplink carrier signal, or a terminal that has a capability of reflecting a downlink carrier signal and that has no capability of generating an uplink carrier signal. Further, the terminal that has the capability of generating an uplink carrier signal includes a terminal whose maximum value of a frequency error is equal to X and a terminal whose maximum value of the frequency error is greater than X. X is a non-negative number. For example, a value of X is equal to 0.1 parts per million ppm.

In a design, the method further includes: sending a message to the access network device, where the message includes the type of the terminal.

According to a fourth aspect, a peer end corresponding to the third aspect is provided. For beneficial effects, refer to descriptions of the third aspect. A bandwidth determining method is provided. The method is performed by an access network device or a unit (a module, a circuit, or the like) in the access network device, and includes: receiving a first uplink signal from a terminal on a first uplink channel; and receiving a second uplink signal from the terminal on a second uplink channel, where a maximum signal bandwidth of the second uplink signal is greater than a maximum signal bandwidth of the first uplink signal.

Optionally, the maximum signal bandwidth may also be referred to as a configurable maximum signal bandwidth, a maximum signal bandwidth that can be configured, an indicated maximum signal bandwidth, a maximum signal bandwidth that can be indicated, or the like. In addition, the maximum signal bandwidth may also be referred to as a maximum signal bandwidth in a configurable maximum signal bandwidth set or a maximum signal bandwidth in an indicated maximum signal bandwidth set.

Optionally, modulation schemes of the first uplink signal and the second uplink signal may be on-off keying OOK, amplitude shift keying ASK, frequency shift keying FSK, or binary phase keying BPSK modulation.

In a design, a maximum value of a frequency error of the first uplink signal is a first value, a maximum value of a frequency error of the second uplink signal is a second value, and the second value is less than the first value.

In a design, the method further includes: sending a first downlink signal to the terminal on a first downlink channel, where the first downlink signal includes frequency adjustment information.

In a design, the first uplink signal is a signal that carries a message 1 in a random access procedure, and the second uplink signal is a signal that carries a message 3 or a message after the message 3 in the random access procedure. The first uplink channel is a physical random access channel PRACH, and the second uplink channel is a physical uplink shared channel PUSCH or a physical uplink control channel PUCCH.

In a design, the first uplink signal is a signal that carries the message 3 in the random access procedure, and the second uplink signal is a signal that carries a message after the message 3, for example, an uplink signal that carries an ACK or a NACK of a message 4 or an uplink signal that carries a message 5. The first uplink channel is a physical uplink shared channel PUSCH. In addition, when the second uplink signal is the uplink signal that carries the message 4, the second uplink channel is a physical uplink control channel PUCCH. When the second uplink signal is the uplink signal that carries the message 5, the second uplink channel is a physical uplink shared channel PUCCH.

In a design, the first uplink signal is a synchronization signal or a reference signal, and the second uplink signal is a signal that carries uplink data information or a signal that carries uplink control information. The synchronization signal or the reference signal is a synchronization signal or a reference signal of the second uplink signal. Alternatively, this may be described as the synchronization signal or the reference signal being associated with the second uplink signal. In addition, the synchronization signal or the reference signal is used by the access network device to perform time synchronization with the terminal. The first uplink channel is a PUSCH, and the second uplink channel is a PUSCH or a PUCCH.

In a design, the method further includes: determining a maximum signal bandwidth of the first uplink signal of the terminal and a maximum signal bandwidth of the second uplink signal of the terminal based on a type of the terminal. For example, a maximum transmission bandwidth of the terminal is determined based on the type of the terminal, and the maximum signal bandwidth of the first uplink signal and the maximum signal bandwidth of the second uplink signal are less than or equal to the maximum transmission bandwidth of the terminal.

In a design, the type of the terminal includes: a terminal that has a capability of generating an uplink carrier signal, or a terminal that has a capability of reflecting a downlink carrier signal and that has no capability of generating an uplink carrier signal. Further, the terminal that has the capability of generating an uplink carrier signal includes a terminal whose maximum value of a frequency error is equal to X and a terminal whose maximum value of the frequency error is greater than X. X is a non-negative number. For example, a value of X is equal to 0.1 parts per million ppm.

In a design, the method further includes: receiving a message from the terminal, where the message includes the type of the terminal.

According to a fifth aspect, a bandwidth determining method is provided. The method is performed by a terminal or a unit (a chip, a circuit, or the like) in the terminal, and includes: receiving a first downlink signal from an access network device on a first downlink channel; and receiving a second downlink signal from the access network device on a second downlink channel, where a maximum signal bandwidth of the second downlink signal is greater than a maximum signal bandwidth of the first downlink signal.

Optionally, modulation schemes of the first downlink signal and the second downlink signal are on-off keying OOK, amplitude shift keying ASK, or frequency shift keying FSK modulation.

According to the foregoing design, maximum signal bandwidths configured for different downlink signals are different. For example, the access network device first sends the first downlink signal to the terminal. When receiving the first downlink signal, the terminal may perform frequency adjustment based on the first downlink signal, so that a maximum value of a frequency error of the terminal decreases. Therefore, subsequently, the second downlink signal sent by the access network device to the terminal may support a larger maximum signal bandwidth. Compared with a case in which downlink signals are configured with a same maximum signal bandwidth, transmission efficiency and frequency domain resource utilization of different downlink transmission phases, different downlink channels, and different downlink signals can be improved. Especially when a modulation scheme with low power consumption and low spectral efficiency is used in a downlink, increasing an effective signal bandwidth can more effectively improve transmission efficiency.

In a design, a maximum value of a frequency error of the first downlink signal is a first value, a maximum value of a frequency error of the second downlink signal is a second value, and the second value is less than the first value.

In a design, the method further includes: The terminal performs frequency calibration based on the first downlink signal.

In a design, the first downlink signal is used for at least one of the following: time synchronization, frequency synchronization, or carrying a system message. The second downlink signal includes a signal that carries downlink data information or a signal that carries downlink control information. The first downlink channel includes a physical broadcast channel PBCH, and the second downlink channel includes a physical downlink shared channel PDSCH or a physical downlink control channel PDCCH.

In the foregoing design, frequency error calibration is performed on a common signal that can be periodically sent, so that transmission efficiency and frequency domain resource utilization can be further improved when a downlink data signal and a control signal are subsequently performed.

In a design, the first downlink signal is a synchronization signal or a reference signal, the synchronization signal or the reference signal is used by the terminal to perform time synchronization with the access network device, and the second downlink signal is a signal that carries downlink data information or carries downlink control information. The synchronization signal or the reference signal is a synchronization signal or a reference signal of the second downlink signal. The first downlink channel is a PDSCH, and the second downlink channel is a PDSCH or a PDCCH.

In the foregoing design, frequency error calibration is performed on a common signal that can be sent together with the data signal, so that transmission efficiency and frequency domain resource utilization can be further improved when a downlink data signal and a control signal are subsequently performed.

In a design, the method further includes: determining a maximum signal bandwidth of the first downlink signal of the terminal and a maximum signal bandwidth of the second downlink signal of the terminal based on a type of the terminal. For example, a maximum transmission bandwidth of the terminal is determined based on the type of the terminal, and the maximum signal bandwidth of the first downlink signal and the maximum signal bandwidth of the second downlink signal are less than or equal to the maximum transmission bandwidth of the terminal.

In a design, the type of the terminal includes: a terminal that has a capability of generating an uplink carrier signal, or a terminal that has a capability of reflecting a downlink carrier signal and that has no capability of generating an uplink carrier signal. Further, the terminal that has the capability of generating an uplink carrier signal includes a terminal whose maximum value of a frequency error is equal to X and a terminal whose maximum value of the frequency error is greater than X. X is a non-negative number. For example, a value of X is equal to 0.1 parts per million ppm.

In a design, the method further includes: sending a message to the access network device, where the message includes the type of the terminal.

According to a sixth aspect, a peer end corresponding to the fifth aspect is provided. For beneficial effects, refer to the descriptions of the fifth aspect. A bandwidth determining method is provided. The method is performed by an access network device or a unit (a chip, a circuit, or the like) in the access network device, and includes: sending a first downlink signal to a terminal on a first downlink channel, and sending a second downlink signal to the terminal on a second downlink channel, where a maximum signal bandwidth of the second downlink signal is greater than a maximum signal bandwidth of the first downlink signal.

Optionally, modulation schemes of the first downlink signal and the second downlink signal are on-off keying OOK, amplitude shift keying ASK, or frequency shift keying FSK modulation.

In a design, a maximum value of a frequency error of the first downlink signal is a first value, a maximum value of a frequency error of the second downlink signal is a second value, and the second value is less than the first value.

In a design, modulation schemes of the first downlink signal and the second downlink signal are on-off keying OOK, amplitude shift keying ASK, or frequency shift keying FSK modulation.

In a design, the first downlink signal is used for at least one of the following: time synchronization, frequency synchronization, or carrying a system message. The second downlink signal includes a signal that carries downlink data information or a signal that carries downlink control information. The first downlink channel includes a physical broadcast channel PBCH, and the second downlink channel includes a physical downlink shared channel PDSCH or a physical downlink control channel PDCCH.

In a design, the first downlink signal is a synchronization signal or a reference signal, the synchronization signal or the reference signal is used by the terminal to perform time synchronization with the access network device, and the second downlink signal is a signal that carries downlink data information or carries downlink control information. The synchronization signal or the reference signal is a synchronization signal or a reference signal of the second downlink signal. The first downlink channel is a PDSCH, and the second downlink channel is a PDSCH or a PDCCH. In a design, the method further includes: determining a maximum signal bandwidth of the first downlink signal of the terminal and a maximum signal bandwidth of the second downlink signal of the terminal based on a type of the terminal. For example, a maximum transmission bandwidth of the terminal is determined based on the type of the terminal, and the maximum signal bandwidth of the first downlink signal and the maximum signal bandwidth of the second downlink signal are less than or equal to the maximum transmission bandwidth of the terminal.

In a design, the type of the terminal includes: a terminal that has a capability of generating an uplink carrier signal, or a terminal that has a capability of reflecting a downlink carrier signal and that has no capability of generating an uplink carrier signal. Further, the terminal that has the capability of generating an uplink carrier signal includes a terminal whose maximum value of a frequency error is equal to X and a terminal whose maximum value of the frequency error is greater than X. X is a non-negative number. For example, a value of X is equal to 0.1 parts per million ppm.

In a design, the method further includes: receiving a message from the terminal, where the message includes the type of the terminal.

According to a seventh aspect, a bandwidth determining method is provided. The method is performed by a terminal or a unit (a chip, a circuit, or the like) in the terminal, and includes: receiving a first downlink signal from an access network device on a first downlink channel; and sending a first uplink signal to the access network device on a first uplink channel, where a maximum signal bandwidth of the first uplink signal is greater than a maximum signal bandwidth of the first downlink signal.

Optionally, a modulation scheme of the first downlink signal is on-off keying OOK, amplitude shift keying ASK, or frequency shift keying FSK modulation. A modulation scheme of the first uplink signal is on-off keying OOK, amplitude shift keying ASK, frequency shift keying FSK, or binary phase keying BPSK modulation.

According to the foregoing design, maximum signal bandwidths configured for an uplink signal and a downlink signal are different. For example, the maximum signal bandwidth of the uplink signal is greater than the maximum signal bandwidth of the downlink signal. Compared with a case in which the uplink signal and the downlink signal are configured with a same maximum signal bandwidth, uplink signal transmission efficiency and frequency domain resource utilization can be improved.

In a design, a maximum value of a frequency error of the first downlink signal is a first value, a maximum value of a frequency error of the first uplink signal is a second value, and the second value is less than the first value.

In a design, the method further includes: performing frequency calibration based on the first downlink signal.

In a design, the first downlink signal is a synchronization signal, a signal that carries a system message, a downlink data signal, a downlink control signal, or the like, and the first uplink signal may be a random access preamble, an uplink data signal, or an uplink control signal. Optionally, the first downlink channel may be a PBCH, a PDCCH, a PDSCH, or the like, and the first uplink channel may be a PRACH, a PUSCH, a PUCCH, or the like.

In a design, the maximum signal bandwidth of the first downlink signal and the maximum signal bandwidth of the first uplink signal may be determined based on a type of the terminal. For example, in an implementation, a maximum transmission bandwidth of the terminal may be determined based on a type of the terminal. The maximum signal bandwidth of the first downlink signal and the maximum signal bandwidth of the first uplink signal are less than or equal to the maximum transmission bandwidth of the terminal.

In a design, the type of the terminal includes: a terminal that has a capability of generating an uplink carrier signal, or a terminal that has a capability of reflecting a downlink carrier signal and that has no capability of generating an uplink carrier signal. Further, the terminal that has the capability of generating an uplink carrier signal includes a terminal whose maximum value of a frequency error is equal to X and a terminal whose maximum value of the frequency error is greater than X. X is a non-negative number. For example, a value of X is equal to 0.1 parts per million ppm.

In a design, the method further includes: sending a message to the access network device, where the message includes the type of the terminal.

According to an eighth aspect, a peer end corresponding to the seventh aspect is provided. For beneficial effects, refer to the descriptions of the seventh aspect. A bandwidth determining method is provided. The method is performed by an access network device or a unit (a chip, a circuit, or the like) in the access network device, and includes: sending a first downlink signal to a terminal on a first downlink channel, and receiving a first uplink signal from the terminal on a first uplink channel. A maximum signal bandwidth corresponding to the first uplink signal is greater than a maximum signal bandwidth corresponding to the first downlink signal.

Optionally, a modulation scheme of the first downlink signal is on-off keying OOK, amplitude shift keying ASK, or frequency shift keying FSK modulation. A modulation scheme of the first uplink signal is on-off keying OOK, amplitude shift keying ASK, frequency shift keying FSK, or binary phase keying BPSK modulation.

In a design, a maximum value of a frequency error of the first downlink signal is a first value, a maximum value of a frequency error of the first uplink signal is a second value, and the second value is less than the first value.

In a design, the first downlink signal is a synchronization signal, a signal that carries a system message, a downlink data signal, a downlink control signal, or the like, and the first uplink signal may be a random access preamble, an uplink data signal, or an uplink control signal. Optionally, the first downlink channel may be a PBCH, a PDCCH, a PDSCH, or the like, and the first uplink channel may be a PRACH, a PUSCH, a PUCCH, or the like.

In a design, the maximum signal bandwidth of the first downlink signal and the maximum signal bandwidth of the first uplink signal may be determined based on a type of the terminal. For example, in an implementation, a maximum transmission bandwidth of the terminal may be determined based on a type of the terminal. The maximum signal bandwidth of the first downlink signal and the maximum signal bandwidth of the first uplink signal are less than or equal to the maximum transmission bandwidth of the terminal.

In a design, the type of the terminal includes: a terminal that has a capability of generating an uplink carrier signal, or a terminal that has a capability of reflecting a downlink carrier signal and that has no capability of generating an uplink carrier signal. Further, the terminal that has the capability of generating an uplink carrier signal includes a terminal whose maximum value of a frequency error is equal to X and a terminal whose maximum value of the frequency error is greater than X. X is a non-negative number. For example, a value of X is equal to 0.1 parts per million ppm.

In a design, the method further includes: receiving a message from the terminal, where the message includes the type of the terminal.

According to a ninth aspect, an apparatus is provided. The apparatus can implement the method in the first aspect, the third aspect, the fifth aspect, or the seventh aspect. For example, the apparatus includes a corresponding means (means) for performing the first aspect, the third aspect, the fifth aspect, or the seventh aspect. The apparatus may be implemented by hardware, implemented by software, or implemented by hardware executing corresponding software.

In a design, the apparatus includes a unit for performing the first aspect, the third aspect, the fifth aspect, or the seventh aspect.

In a design, the apparatus includes a processor, and the processor is configured to perform the method in the first aspect, the third aspect, the fifth aspect, or the seventh aspect.

In a design, the apparatus includes a processor and an interface circuit. The interface circuit is configured to receive a signal from an apparatus other than the apparatus and transmit the signal to the processor, or send a signal from the processor to an apparatus other than the apparatus. The processor is configured to implement the method in the first aspect, the third aspect, the fifth aspect, or the seventh aspect by using the logic circuit or by executing code instructions.

In a design, the apparatus includes a processor and a memory. The processor is configured to execute a computer program or instructions stored in the memory, so that the apparatus implements the method in the first aspect, the third aspect, the fifth aspect, or the seventh aspect.

According to a tenth aspect, an apparatus is provided. The apparatus can implement the method in the second aspect, the fourth aspect, the sixth aspect, or the eighth aspect. For example, the apparatus includes a corresponding means (means) for performing the second aspect, the fourth aspect, the sixth aspect, or the eighth aspect. The apparatus may be implemented by hardware, implemented by software, or implemented by hardware executing corresponding software.

In a design, the apparatus includes a unit for performing the second aspect, the fourth aspect, the sixth aspect, or the eighth aspect.

In a design, the apparatus includes a processor, and the processor is configured to perform the method in the second aspect, the fourth aspect, the sixth aspect, or the eighth aspect.

In a design, the apparatus includes a processor and an interface circuit. The interface circuit is configured to receive a signal from an apparatus other than the apparatus and transmit the signal to the processor, or send a signal from the processor to an apparatus other than the apparatus. The processor is configured to implement the method in the second aspect, the fourth aspect, the sixth aspect, or the eighth aspect by using the logic circuit or by executing code instructions.

In a design, the apparatus includes the processor and a memory. The processor is configured to execute a computer program or instructions stored in the memory, so that the apparatus implements the method in the second aspect, the fourth aspect, the sixth aspect, or the eighth aspect.

According to an eleventh aspect, a computer-readable storage medium is provided. The computer-readable storage medium stores a computer program or instructions. When the computer program or the instructions are run on a computer, the computer is caused to implement the method in any one of the first aspect to the eighth aspect.

According to a twelfth aspect, a computer program product is provided. The computer program product includes a computer program or instructions. When the computer program or the instructions are run on a computer, the method in any one of the first aspect to the eighth aspect is performed.

According to a thirteenth aspect, a chip is provided. The chip includes a processor. The processor is coupled to a memory, and is configured to execute a computer program or instructions stored in the memory, to cause the chip to implement the method in any one of the first aspect to the eighth aspect.

According to a fourteenth aspect, a communication system is provided. The communication system includes a first apparatus and a second apparatus. The first apparatus is configured to implement the method in the first aspect, and the second apparatus is configured to implement the method in the second aspect; or the first apparatus is configured to implement the method in the third aspect, and the second apparatus is configured to implement the method in the fourth aspect; or the first apparatus is configured to implement the method in the fifth aspect, and the second apparatus is configured to implement the method in the sixth aspect; or the first apparatus is configured to implement the method in the seventh aspect, and the second apparatus is configured to implement the method in the eighth aspect.

### BRIEF DESCRIPTION OF DRAWINGS

FIG. 1 is a diagram of a communication system according to an embodiment of this application;
FIG. 2 is a diagram of a procedure according to an embodiment of this application;
FIG. 3 is another diagram of a procedure according to an embodiment of this application;
FIG. 4 is still another diagram of a procedure according to an embodiment of this application;
FIG. 5 is still another diagram of a procedure according to an embodiment of this application;
FIG. 6 is a diagram of a structure of an apparatus according to an embodiment of this application; and
FIG. 7 is a diagram of another structure of an apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings. Specific operation methods, function descriptions, and the like in method embodiments may also be applied to apparatus embodiments or system embodiments.

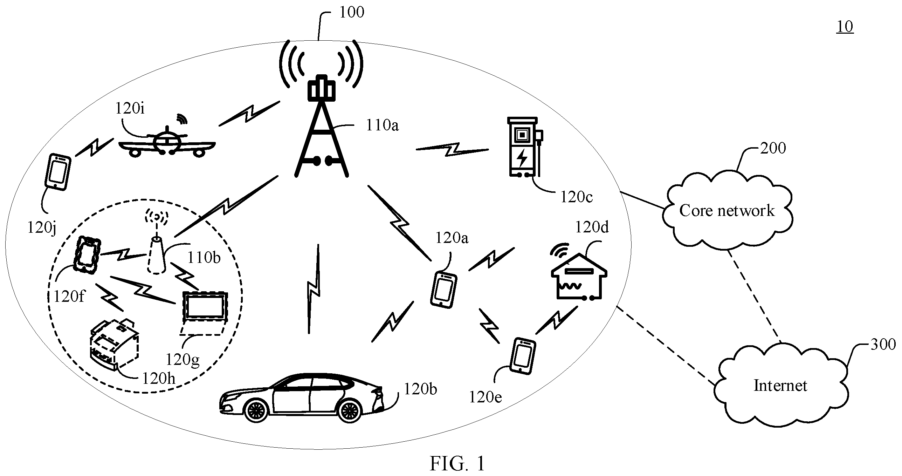

FIG. 1 is a diagram of a possible and non-limiting system. As shown in FIG. 1, a communication system 10 includes a radio access network (radio access network, RAN) 100 and a core network (core network, CN) 200. Optionally, an internet 300 is further included.

The RAN 100 includes at least one RAN node (for example, 110a and 110b in FIG. 1, collectively referred to as 110) and at least one terminal (for example, 120a to 120j in FIG. 1, collectively referred to as 120). The RAN 100 may also include another RAN node, for example, a wireless relay device and/or a wireless backhaul device (not shown in FIG. 1).

A terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a core network device logical function and a radio access network logical function.

The RAN 100 may be a cellular system related to the 3rd generation partnership project (3rd generation partnership project, 3GPP), for example, a 4th generation (4th generation, 4G) mobile communication system, a 5th generation (5th generation, 5G) mobile communication system, or a future-oriented evolved system, for example, a 6th generation (6th generation, 6G) mobile communication system. The RAN 100 may alternatively be an open access network (open RAN, O-RAN, or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 may be sometimes referred to as an access network device, a RAN entity, an access node, or the like, and forms a part of a communication system, to help a terminal implement radio access. In subsequent descriptions of this application, unless otherwise specified, an "access network device" is used for description. A plurality of RAN nodes 110 in the communication system 10 may be nodes of a same type, or may be nodes of different types. In some scenarios, roles of the RAN node 110 and the terminal 120 are relative. For example, a network element 120i in FIG. 1 may be a helicopter or an uncrewed aerial vehicle, and may be configured as a mobile base station. For the terminal 120j that accesses the RAN 100 via the network element 120i, the network element 120i is a base station. However, for a base station 110a, the network element 120i is a terminal. Sometimes, the RAN node 110 and the terminal 120 are both referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU). All or a part of functions of the RAN node in embodiments of this application may alternatively be implemented by using a software function running on hardware, or may be implemented by using a virtualization function instantiated on a platform (for example, a cloud platform). Alternatively, the RAN node in embodiments of this application may be a logical node, a logical module, or software that can implement all or a part of functions of the RAN node.

In another possible scenario, a plurality of RAN nodes cooperate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal may also be referred to as a terminal device, user equipment (user equipment, UE), a tag, a mobile station, a mobile terminal, or the like. The terminal may be widely used in various scenarios such as device-to-device (device-to-device, D2D) communication, vehicle-to-everything (vehicle-to-everything, V2X) communication, machine-type communication (machine-type communication, MTC), an internet of things (internet of things, IoT), virtual reality (virtual reality, VR), augmented reality (augmented reality, AR), industrial control, self-driving, telemedicine, a smart grid, smart furniture, a smart office, a smart wearable, smart transportation, and a smart city. The terminal may be a mobile phone, a head-mounted display device, a tablet computer, a computer having a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

In a design, a fixed maximum transmission bandwidth and a fixed minimum guard bandwidth (guard bandwidth, GB) are defined within a channel bandwidth of a terminal. The channel bandwidth of the terminal may be referred to as a first channel bandwidth. For example, the first channel bandwidth of the terminal is 200 kHz. A fixed maximum transmission bandwidth of 180 kHz and a fixed minimum guard bandwidth of 10 kHz are defined within the 200 kH first channel bandwidth. For example, a 10 kHz minimum guard bandwidth is reserved on each of both sides of a maximum transmission bandwidth of 180 kHz. There are a plurality of types of terminals, and different types of terminals have different requirements on maximum values of tolerable frequency errors. Within a specific channel bandwidth, setting configurations of a maximum transmission bandwidth and a minimum guard bandwidth to fixed values for all types of terminals has various disadvantages. For example, for a terminal that has a relaxed requirement on a maximum frequency error (in other words, a maximum value of a frequency error is large), a large minimum guard bandwidth and a small maximum transmission bandwidth need to be configured. Correspondingly, the terminal has a weak frequency error calibration capability. If the maximum transmission bandwidth and the minimum guard bandwidth are set to fixed values for all types of terminals, for a terminal that has a weak frequency offset calibration capability, a part of transmitted signals may fail to meet requirements, resulting in interference to transmission of other information in an adjacent frequency domain resource and degrading system transmission performance. For a terminal that has a strict requirement on a maximum tolerable frequency error (in other words, a maximum value of a frequency error is small), a small minimum guard bandwidth and a large maximum transmission bandwidth need to be configured. Correspondingly, the terminal has a strong frequency error calibration capability. If the maximum transmission bandwidth and the minimum guard bandwidth are set to fixed values for all types of terminals, a frequency domain resource may be wasted.

In this embodiment of this application, a maximum transmission bandwidth of a terminal is determined based on a type of the terminal, so that the maximum transmission bandwidth of the terminal matches the type of the terminal, and a minimum guard bandwidth of the terminal further matches the type of the terminal. In this way, various disadvantages caused by setting the maximum transmission bandwidth and the minimum guard bandwidth of the terminal to fixed values can be resolved.

For ease of understanding, the type of the terminal in embodiments of this application is described, and descriptions are used as a part of embodiments of this application.

### 1. A terminal that has a capability of reflecting a downlink carrier signal and that has no capability of generating an uplink carrier signal

This type of terminal may be referred to as a backscatter (backscatter) terminal. The backscatter terminal refers to a terminal that performs uplink signal transmission based on backscatter. This type of terminal has no capability of actively producing or generating an uplink carrier signal, or in other words, has no capability of actively performing uplink transmission, and needs to use a carrier signal that is sent in a downlink (that is, a downlink carrier signal) for reflection, to implement uplink signal transmission. For example, the backscatter terminal may receive a downlink carrier signal. For example, the downlink carrier signal may be a carrier signal of a single frequency, may be an orthogonal frequency division multiplexing (orthogonal frequency division multiplexing, OFDM) signal that occupies a single subcarrier in frequency domain, or may be an OFDM signal that occupies a plurality of subcarriers in frequency domain. The backscatter terminal may modulate uplink information to be transmitted onto the received downlink carrier signal, and reflects the downlink carrier signal in an uplink.

The backscatter terminal may include a passive terminal and a semi-passive terminal. The passive terminal refers to a terminal that is entirely dependent on entirely external energy for energy supply. For example, the passive terminal may receive an energy signal sent by an access network device, and convert the energy signal into a direct current voltage through a rectifier or the like, to supply energy. The energy can support the passive terminal in demodulating a downlink signal, reflecting and sending an uplink modulation signal, and the like. The semi-passive terminal refers to a terminal that is powered by both external and internal energy supplies.

Optionally, for a backscatter terminal, a device that provides a downlink carrier signal may be an access network device, or may be a reader (reader) device, a helper device (helper), another device that can excite a backscatter radio frequency terminal, or the like. It may be understood that the device that provides a downlink carrier signal and a device that provides an energy signal may be a same device, or different devices, or the like. This is not limited.

The backscatter terminal has no capability of generating an uplink carrier signal and has no capability of generating a high-frequency local oscillator, and only has a low-frequency clock. The low-frequency clock of the backscatter terminal has a large clock sampling deviation due to a limitation of low power consumption, resulting in large frequency errors in sending an uplink signal and receiving a downlink signal.

In a design, a passive (passive) terminal and a semi-passive (semi-passive) terminal may be a terminal, a passive terminal, a semi-passive terminal, and the like in an ambient internet of things (ambient IoT, A-IoT), and may be respectively referred to as a passive A-IoT terminal and a semi-passive A-IoT terminal.

### 2. A terminal that has a capability of generating an uplink carrier signal

The terminal that has the capability of generating an uplink carrier signal is classified into two types: a legacy (legacy) terminal and an active terminal in the A-IoT. The active terminal in the A-IoT may be referred to as an active A-IoT terminal for short. A maximum value of a frequency error of the legacy terminal may be equal to X, and a maximum value of a frequency error of the active A-IoT terminal may be greater than X. In an implementation, X is a non-negative number. For example, X is equal to 0.1 parts per million (parts per million, ppm). For example, the legacy terminal may be a terminal in 5G, and may be referred to as a new radio (new radio, NR) terminal; or may be a terminal in 4G, and may be referred to as a long term evolution (long term evolution, LTE) terminal; or may be a terminal in a narrow band-internet of things, and may be referred to as a narrow band-internet of things (narrow band IoT, NB-IoT) terminal.

The active A-IoT terminal has a capability of actively generating an uplink carrier signal, and can actively perform uplink transmission. Different from the legacy terminal, the active A-IoT terminal still needs to obtain energy from the outside or needs to obtain a part of required energy from the outside for signal transmission. For the active A-loT terminal, no other device is needed to provide a downlink carrier signal. The active A-IoT terminal modulates an uplink signal onto an uplink carrier generated by the active A-IoT terminal, to enable uplink transmission. However, due to a limitation of low power consumption of the active A-IoT terminal, an oscillator for generating a local oscillation frequency is generally a ring oscillator, so that a residual frequency error is greater than a frequency error of a legacy terminal, and a maximum value of the frequency error is greater than X. For the active A-IoT terminal, a maximum value of a typical frequency error may be 1 ppm, 5 ppm, 10 ppm, 20 ppm, 50 ppm, or the like.

### Embodiment 1

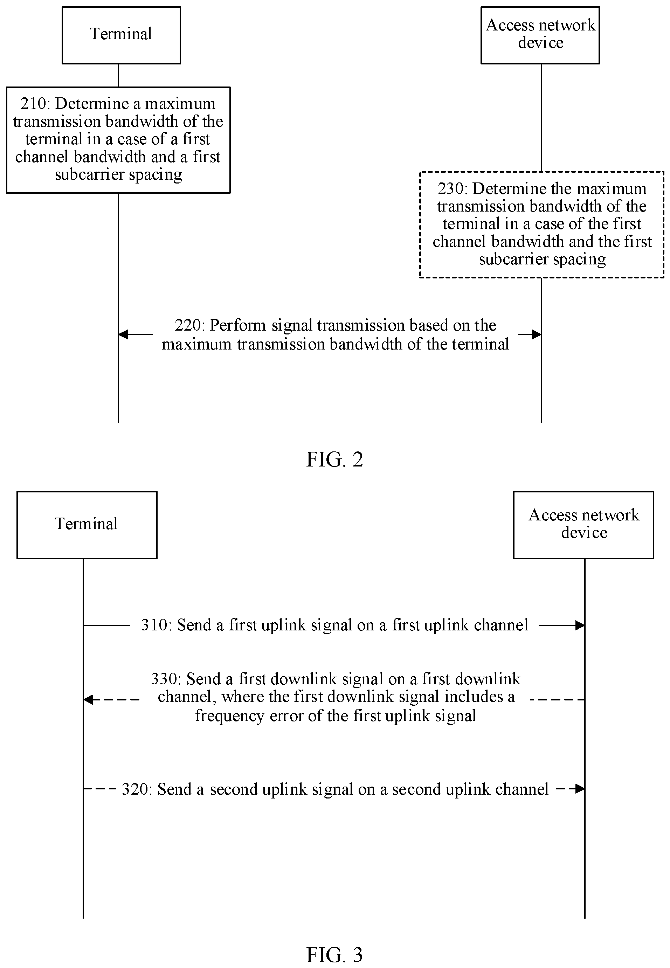

In Embodiment 1, a terminal or an access network device may determine a maximum transmission bandwidth of the terminal based on a type of the terminal. As shown in FIG. 2, a procedure is provided, and includes the following steps.

Step 210: The terminal determines the maximum transmission bandwidth of the terminal in a case of a first channel bandwidth and a first subcarrier spacing.

In an implementation, the first channel bandwidth and the first subcarrier spacing may be a channel bandwidth and a subcarrier spacing for current transmission of the terminal. Alternatively, this may be described as follows: The terminal performs signal transmission with the access network device in a case of the first channel bandwidth and the first subcarrier spacing, where the signal transmission includes uplink signal transmission and downlink signal transmission.

In a design, for example, the first channel bandwidth and the first subcarrier spacing may be specified in a protocol, predefined, or configured by the access network device for the terminal. This is not limited. For example, a frequency band specified in the protocol includes an n8 frequency band, an n10 frequency band, an n28 frequency band, or another NR frequency band. The n8 frequency band is used as an example. The frequency band is a frequency division duplexing (frequency division duplexing, FDD) frequency band. An uplink frequency range of the frequency band is 880 MHz to 915 MHz, and a downlink frequency range of the frequency band is 925 MHz to 960 MHz. In correspondence to the n8 frequency band, if a subcarrier spacing configured in a case of the frequency band is 15 kHz, the first channel bandwidth may be 5 MHz, 10 MHz, 15 MHz, or 20 MHz. If the subcarrier spacing configured in a case of the frequency band is 30 kHz, the first channel bandwidth may be 10 MHz, 15 MHz, or 20 MHz.

In a design, the first channel bandwidth includes the maximum transmission bandwidth and a minimum guard bandwidth. All frequency domain resources in the maximum transmission bandwidth may be used to transmit a signal, and all frequency domain resources in the minimum guard bandwidth cannot be used to transmit a signal. The n8 frequency band is still used as an example. If the first channel bandwidth is 5 MHz, and the configured subcarrier spacing is 15 kHz, the maximum transmission bandwidth specified in the protocol is 25 resource blocks (resource blocks, RBs), and each RB occupies 12 subcarriers. In a case of the 15 kHz subcarrier spacing, each RB corresponds to 180 kHz (12*15 kHz=180 kHz), and 25 RBs occupy 4.5 MHz (25*180 kHz=4,500 kHz=4.5 MHz). The minimum guard bandwidth specified in the protocol satisfies the following: Minimum guard bandwidth=(Channel bandwidth-Maximum transmission bandwidth)/2-Subcarrier spacing/2. In the foregoing example, if the channel bandwidth is 5 MHz, the maximum transmission bandwidth is 4.5 MHz, and the subcarrier spacing is 15 kHz, the minimum guard bandwidth may be (5 MHz-4.5 MHz)/2-15 kHz/2=242.5 kHz. The minimum guard bandwidth is located on each of both sides of the maximum transmission bandwidth, and occupies 242.5 kHz.

In a design, the maximum transmission bandwidth of the terminal is associated with the type of the terminal in a case of the first channel bandwidth and the first subcarrier spacing. Alternatively, step 210 may be described as follows: The terminal determines, based on the terminal type of the terminal, the maximum transmission bandwidth of the terminal in a case of the first channel bandwidth and the first subcarrier spacing. Optionally, the type of the terminal may also be referred to as a capability of the terminal. Different types of terminals correspond to different frequency offset calibration capabilities.

For example, the type of the terminal includes: a terminal that has a capability of generating an uplink carrier signal, and a terminal that has a capability of reflecting a downlink carrier signal and that has no capability of generating an uplink carrier signal.
1. The terminal that has the capability of reflecting a downlink carrier signal and that has no capability of generating an uplink carrier signal may also be referred to as a backscatter terminal. The backscatter terminal includes a passive terminal and a semi-passive terminal. The backscatter terminal has no capability of automatically generating an uplink carrier signal, and needs to perform uplink transmission by using a downlink carrier signal sent by another device.
2. The terminal that has the capability of generating an uplink carrier signal may include a terminal whose maximum value of a frequency error is equal to X, and a terminal whose maximum value of the frequency error is greater than X.

The terminal whose maximum value of the frequency error is equal to X may be a legacy terminal, for example, an NR terminal, an LTE terminal, or an NB-IoT terminal. The terminal whose maximum value of the frequency error is greater than X may be an active terminal in an A-IoT, and may be referred to as an active A-IoT terminal for short.

In a design, for the first channel bandwidth, there is a correspondence between the type of the terminal and the maximum transmission bandwidth. For example, the correspondence between the type of the terminal and the maximum transmission bandwidth may be specified in the protocol, predefined, or configured by the access network device for the terminal. This is not limited. In the case of the current first channel bandwidth, the terminal may determine, based on the type of the terminal, the maximum transmission bandwidth of the terminal in the correspondence between the type of the terminal and the maximum transmission bandwidth. Then, the terminal determines the minimum guard bandwidth based on the first channel bandwidth and the maximum transmission bandwidth. For example, the minimum guard bandwidth satisfies the following: Minimum guard bandwidth=(First channel bandwidth-Maximum transmission bandwidth)/2-Subcarrier spacing/2.

For the backscatter terminal, there is a frequency offset. The minimum guard bandwidth is set mainly to cope with the frequency offset of the backscatter terminal. For example, a first channel bandwidth of the passive terminal is one RB. When the subcarrier spacing is 15 kHz, one RB occupies 180 kHz (15 kHz*12=180 kHz). If a maximum value of a frequency error of the passive terminal is equal to 7%, within the first channel bandwidth, a frequency offset of the passive terminal is equal to 180 kHz*7%=12.6 kHz. The minimum guard bandwidth configured for the passive terminal needs to be greater than or equal to 12.6 kHz.

For the legacy terminal and the active A-IoT terminal, there is a carrier frequency error (carrier frequency error). The minimum guard bandwidth is set mainly to cope with frequency errors of the legacy terminal and the active A-IoT terminal. The frequency error may be measured in ppm. For example, a maximum value of the frequency error of the active A-IoT terminal is equal to 10 ppm, and when a carrier frequency is 900 MHz, a maximum value of an actual frequency offset corresponding to 10 ppm is equal to 9 kHz (900 MHz*10 ppm). In this case, the minimum guard bandwidth configured for the active A-IoT terminal needs to be greater than or equal to 9 kHz.

In a design, frequency offset calibration capabilities of the legacy terminal and the active A-IoT terminal are stronger than that of the backscatter terminal. Therefore, minimum guard bandwidths corresponding to the legacy terminal and the active A-IoT terminal may be less than that corresponding to the backscatter terminal. When the first channel bandwidth of the terminal is fixed, a relationship between the minimum guard bandwidth and the maximum transmission bandwidth is as follows: A smaller minimum guard bandwidth indicates a larger maximum transmission bandwidth. On the contrary, a larger minimum guard bandwidth indicates a smaller maximum transmission bandwidth.

In other words, maximum transmission bandwidths corresponding to the legacy terminal and the active A-IoT terminal may be greater than that corresponding to the backscatter terminal. Alternatively, this may be described as follows: A maximum transmission bandwidth corresponding to the terminal that has the capability of generating an uplink carrier signal is greater than a maximum transmission bandwidth corresponding to the terminal that has the capability of backscattering a downlink carrier signal and that has no capability of generating an uplink carrier signal.

In a design, for the legacy terminal and the active A-IoT terminal, a frequency offset calibration capability of the legacy terminal is stronger than that of the active A-IoT terminal. For example, the maximum value of the frequency error of the legacy terminal is equal to X, and the maximum value of the frequency error of the active A-IoT terminal is greater than X. When the minimum guard bandwidth corresponding to the legacy terminal is less than the minimum guard bandwidth corresponding to the active A-IoT terminal, further, the maximum transmission bandwidth corresponding to the legacy terminal is greater than the maximum transmission bandwidth corresponding to the active A-IoT terminal. Alternatively, this may be described as follows: A maximum transmission bandwidth corresponding to the terminal whose maximum value of the frequency error is equal to X is greater than a maximum transmission bandwidth corresponding to the terminal whose maximum value of the frequency error is greater than X.

For example, for the legacy terminal and the active A-IoT terminal, the first channel bandwidth is 180 kHz, the first subcarrier spacing is 15 kHz, and the legacy terminal and the active A-IoT terminal both operate in a 1.8 GHz frequency band. The maximum value of the frequency error of the active A-IoT terminal is 10 ppm. In a 1.8 GHz frequency band, an actual frequency corresponding to 10 ppm is equal to 18 kHz (1.8 GHz*10 ppm), in other words, a maximum value of a frequency offset of the active A-IoT terminal is equal to 18 kHz. In a design, within a 180 kHz channel bandwidth of the active terminal, a maximum transmission bandwidth may be configured as 135 kHz, and a minimum guard bandwidth configured on each of both sides of the maximum transmission bandwidth may be 22.5 kHz. When the maximum value of the frequency error of the legacy terminal is 1 ppm, in a 1.8 GHz frequency band, an actual frequency corresponding to 1 ppm is equal to 0.18 kHz. In a design, within a 180 kH channel bandwidth of the legacy terminal, a maximum transmission bandwidth may be configured as 170 kHz, and a minimum guard bandwidth configured on each of both sides of the maximum transmission bandwidth may be 5 kHz. It can be learned that under a same condition, the maximum transmission bandwidth corresponding to the legacy terminal is 170 kHz, and is greater than the maximum transmission bandwidth that is 135 kHz and that corresponds to the active A-IoT terminal.

Step 220: The terminal performs signal transmission with the access network device based on the maximum transmission bandwidth of the terminal.

In a design, after determining the maximum transmission bandwidth of the terminal, the terminal may perform signal transmission with the access network device within the maximum transmission bandwidth. The signal transmission may be uplink signal transmission or a downlink signal bandwidth. For example, the maximum transmission bandwidth of the terminal includes 10 RBs, and indexes of the 10 RBs are 0 to 9. When the subcarrier spacing is 15 kHz, each RB occupies 180 kHz. The access network device may configure, within the maximum transmission bandwidth of the terminal, a signal bandwidth for the terminal. The signal bandwidth may be an uplink signal bandwidth or a downlink signal bandwidth. For example, the access network device may indicate or configure the terminal to perform signal transmission on RBs whose indexes are 0 and 1. In this case, the terminal may determine, within the maximum transmission bandwidth of the terminal, RBs corresponding to indexes 0 and 1; and send an uplink signal and receive a downlink signal on the RB corresponding to the index 0 and the RB corresponding to the index 1. The RB corresponding to the index 0 and the RB corresponding to the index 1 may be considered as the uplink signal bandwidth or the downlink signal bandwidth of the terminal.

In a design, a maximum uplink transmission bandwidth of the terminal may be the same as a maximum downlink transmission bandwidth of the terminal. The foregoing maximum transmission bandwidth of the terminal may be the maximum uplink transmission bandwidth or the maximum downlink transmission bandwidth of the terminal. Alternatively, a maximum uplink transmission bandwidth of the terminal may be different from a maximum downlink transmission bandwidth of terminal. The foregoing maximum transmission bandwidth of the terminal includes the maximum uplink transmission bandwidth and the maximum downlink transmission bandwidth of the terminal. Further, the maximum uplink transmission bandwidth of the terminal may be greater than the maximum downlink transmission bandwidth of the terminal. For example, when the first channel bandwidth is 360 kHz, the maximum uplink transmission bandwidth of the terminal may be 320 kHz, and the maximum downlink transmission bandwidth of the terminal may be 180 kHz. This design is mainly based on the following consideration: When accessing a network, the terminal first receives a downlink signal. The downlink signal may be a synchronization signal, another broadcast signal, or the like. The terminal may perform frequency calibration based on the downlink signal. In this case, a frequency error of the terminal decreases, so that a larger maximum transmission bandwidth can be supported during uplink transmission. For example, if no frequency calibration is performed, the frequency error of the active A-IoT terminal is 100 ppm, and in a 900 MHz frequency band, an actual frequency error value corresponding to 100 ppm is 9 kHz. If the first channel bandwidth of the active A-IoT terminal is 360 kHz, a maximum downlink transmission bandwidth of the active A-IoT terminal may be configured as 180 kHz, and the minimum guard bandwidth may be configured as 90 kHz ((360 kHz-180 kHz)/2). When receiving a downlink signal, the active A-IoT terminal performs frequency calibration based on the downlink signal. After the calibration, a residual frequency error of the active A-IoT terminal is 10 ppm, and in a 900 MHz frequency band, an actual frequency error corresponding to 10 ppm is 0.9 kHz. In this case, the maximum uplink transmission bandwidth of the active A-IoT terminal may be configured as 320 kHz, and the minimum guard bandwidth may be configured as 20 kHz ((360-320)/2). It can be learned that, for the active A-IoT terminal, the maximum uplink transmission bandwidth of 320 kHz is greater than the maximum downlink transmission bandwidth of 180 kHz.

Optionally, the procedure in FIG. 2 may further include the following step:
Step 230: The access network device determines the maximum transmission bandwidth of the terminal in a case of the first channel bandwidth and the first subcarrier spacing.

A process in which the access network device determines the maximum transmission bandwidth of the terminal is similar to a process in which the terminal determines the maximum transmission bandwidth of the terminal. For example, the access network device may determine, based on the type of the terminal, the maximum transmission bandwidth of the terminal in a case of the first channel bandwidth and the first subcarrier spacing. A manner in which the access network device obtains the terminal type is not limited. For example, the terminal may actively report the type of the terminal to the access network device. For example, in an implementation, when accessing the access network device, the terminal may actively report the type of the terminal to the access network device. For other content of determining, by the access network device, the maximum transmission bandwidth of the terminal, refer to the descriptions on a terminal side. Details are not described again.

It may be understood that, in the descriptions of step 220, after the terminal determines the maximum transmission bandwidth of the terminal, the terminal may perform transmission with the access network device based on the maximum transmission bandwidth of the terminal. Optionally, in step 230, after the access network device determines the maximum transmission bandwidth of the terminal, the access network device may perform signal transmission with the terminal based on the maximum transmission bandwidth of the terminal. The signal transmission may include uplink signal transmission and/or downlink signal transmission. Different from the terminal side, the access network device may schedule uplink signal transmission, downlink signal transmission, or the like for the terminal based on the maximum transmission bandwidth of the terminal.

For example, if the maximum transmission bandwidth of the terminal includes 10 RBs, the access network device determines, from the 10 RBs corresponding to the maximum transmission bandwidth of the terminal, one or more RBs as a downlink signal bandwidth or an uplink signal bandwidth, and configures or indicates, for or to the terminal, the one or more RBs corresponding to the downlink signal bandwidth or the uplink signal bandwidth. For downlink transmission, the access network device sends a downlink signal to the terminal in the downlink signal bandwidth. Correspondingly, the terminal receives, in the downlink signal bandwidth, the downlink signal sent by the access network device. For uplink transmission, the terminal sends an uplink signal to the access network device in the uplink signal bandwidth. Correspondingly, the access network device receives, in the uplink signal bandwidth, the uplink signal sent by the terminal.

In the solution in FIG. 2, the descriptions focus on that a process in which the terminal and the access network device each determine the maximum transmission bandwidth of the terminal based on the type of the terminal, and then communicate with each other based on the maximum transmission bandwidth of the terminal. Alternatively, in a design, the access network device may determine the maximum transmission bandwidth of the terminal based on the type of the terminal. The access network device may configure or indicate, for or to the terminal, the maximum transmission bandwidth of the terminal. The terminal may obtain the maximum transmission bandwidth of the terminal based on a configuration or an indication from the access network device. In this design, because the terminal does not need to autonomously determine the maximum transmission bandwidth of the terminal based on the type of the terminal, energy consumption of the terminal can be reduced. Alternatively, in another design, the terminal may determine the maximum transmission bandwidth of the terminal based on the type of the terminal, and report the maximum transmission bandwidth of the terminal to the access network device. The access network device may obtain the maximum transmission bandwidth of the terminal based on a report of the terminal, and does not need to autonomously determine the maximum transmission bandwidth of the terminal.

In an implementation, in a current wireless communication system, for example, a 5G communication system, as the first channel bandwidth of the terminal increases, a proportion of the minimum guard bandwidth to the first channel bandwidth decreases, and a proportion of the maximum transmission bandwidth to the first channel bandwidth increases. For example, in a frequency band below 6 GHz, a minimum value of the first channel bandwidth of the terminal is 5 MHz, and a maximum value is 100 MHz. In a range from 5 MHz to 100 MHz, if the subcarrier spacing is 15 kHz, as the first channel bandwidth gradually increases, the proportion of the minimum guard bandwidth to the first channel bandwidth gradually decreases, and the proportion of the maximum transmission bandwidth to the first channel bandwidth gradually increases. For example, when the first channel bandwidth is 5 MHz, the maximum transmission bandwidth is 25 RBs, that is, 4.32 MHz, and the maximum transmission bandwidth accounts for 90%. For example, when the first channel bandwidth is 10 MHz, the maximum transmission bandwidth is 52 RBs, that is, 9.36 MHz, and the maximum transmission bandwidth accounts for 93.6%. For example, when the first channel bandwidth is 15 MHz, the maximum transmission bandwidth is 79 RBs, that is, 14.22 MHz, and the maximum transmission bandwidth accounts for 94.8%. In this embodiment of this application, the frequency error of the backscatter terminal may fluctuate as the channel bandwidth increases, and a proportional relationship between the maximum transmission bandwidth and the first channel bandwidth does not satisfy a definition manner in which as the first channel bandwidth increases, the proportion of the minimum guard bandwidth gradually decreases, and the proportion of the maximum transmission bandwidth gradually increases.

In a design, the maximum transmission bandwidth and the minimum guard bandwidth of the terminal are associated with a frequency band of the terminal. A higher frequency value corresponding to the frequency band indicates a smaller maximum transmission bandwidth and a larger minimum guard bandwidth of the terminal. Optionally, the minimum guard bandwidth is in a proportional relationship with a carrier frequency, a carrier center frequency, a start frequency of a frequency band, or a cut-off frequency of the frequency band. For example, when the carrier frequency is 900 MHz and the frequency error is 0.1 ppm, a frequency offset is 9 kHz; and when the carrier frequency is 1.8 GHz and the frequency error is 0.1 ppm, the frequency offset is 18 kHz.

In Embodiment 1, different types of terminals have different frequency offset calibration capabilities. In this embodiment of this application, the maximum transmission bandwidth that matches the frequency offset calibration capability of the terminal may be determined based on the type of the terminal. For example, for a terminal that has a weak frequency offset calibration capability, a large minimum guard bandwidth and a small maximum transmission bandwidth may be configured. For a terminal that has a good frequency offset calibration capability, a small minimum guard bandwidth and a large maximum transmission bandwidth may be configured, so that the maximum transmission bandwidth configured for the terminal matches the frequency offset calibration capability of the terminal.

### Embodiment 2

A solution in Embodiment 2 is mainly used to compare maximum signal bandwidths of two uplink signals. For example, an uplink signal sent by a terminal earlier is referred to as a first uplink signal, and an uplink signal sent later is referred to as a second uplink signal. A maximum signal bandwidth of the second uplink signal may be greater than a maximum signal bandwidth of the first uplink signal. This is mainly based on the following consideration: The terminal may perform frequency calibration based on the first uplink signal sent earlier. Therefore, after the calibration, a frequency error of the terminal decreases, and the maximum signal bandwidth supported by the second uplink signal may be less than the maximum signal bandwidth supported by the first uplink signal. Compared with a case in which the second uplink signal and the first uplink signal are configured with a same maximum signal bandwidth, transmission efficiency and frequency domain resource utilization of different uplink transmission phases, different uplink channels, and uplink transmission of different uplink signals can be improved. As shown in FIG. 3, a procedure is provided, and includes at least the following steps.

Step 310: The terminal sends the first uplink signal to an access network device on a first uplink channel. The access network device receives the first uplink signal from the terminal on the first uplink channel.

Step 320: The terminal sends the second uplink signal to the access network device on a second uplink channel. The access network device receives the second uplink signal from the terminal on the second uplink channel.

In a design, the maximum signal bandwidth of the second uplink signal is greater than the maximum signal bandwidth of the first uplink signal. Optionally, a maximum value of a frequency error of the first uplink signal may be a first value, a maximum value of a frequency error of the second uplink signal may be a second value, and the second value may be less than the first value. In other words, because the maximum value of the frequency error of the second uplink signal is less than the maximum value of the frequency error of the first uplink signal, the second uplink signal may support a larger maximum signal bandwidth than the first uplink signal.

In an implementation, the first uplink signal corresponds to a first bandwidth set, and the second uplink signal corresponds to a second bandwidth set. For example, the first bandwidth set and the second bandwidth set may be specified in a protocol, preset, or configured by the access network device for the terminal. This is not limited. Optionally, the first bandwidth set corresponding to the first uplink signal may also be referred to as the first bandwidth set corresponding to the first uplink channel, and the second bandwidth set corresponding to the second uplink signal may also be referred to as the second bandwidth set corresponding to the second uplink channel. The first bandwidth set and the second bandwidth set each include at least one signal bandwidth. During actual transmission, the access network device may configure one signal bandwidth in the first bandwidth set for the terminal, and the terminal sends the first uplink signal on the first uplink channel based on the configured signal bandwidth. The access network device may configure one signal bandwidth in the second bandwidth set for the terminal, and the terminal sends the second uplink signal on the second uplink channel based on the configured signal bandwidth. In this embodiment of this application, a value relationship between the signal bandwidth of the first uplink signal transmitted on the first uplink channel and the signal bandwidth of the second uplink signal transmitted on the second uplink channel is not limited. Only a value relationship between a maximum signal bandwidth in the second bandwidth set and a maximum signal bandwidth in the first bandwidth set is limited. For example, the maximum signal bandwidth in the second bandwidth set is greater than the maximum signal bandwidth in the first bandwidth set. It may be understood that the maximum signal bandwidth in the second bandwidth set is the foregoing maximum signal bandwidth of the second uplink signal, and the maximum signal bandwidth in the first bandwidth set is the foregoing maximum signal bandwidth of the first uplink signal. For example, if a maximum transmission bandwidth of the terminal may be 180 kHz, the first bandwidth set corresponding to the first uplink signal includes 15 kHz, 30 kHz, 60 kHz, and 120 kHz. The second bandwidth set corresponding to the second uplink signal includes 15 kHz, 30 kHz, 60 kHz, 120 kHz, and 150 kHz. It can be learned that the maximum signal bandwidth in the second bandwidth set, that is, the maximum signal bandwidth of 150 kHz of the second uplink signal, is greater than the maximum signal bandwidth in the first bandwidth set, that is, the maximum signal bandwidth of 120 kHz of the first uplink signal. During actual transmission, the access network device may configure or indicate, for or to the terminal, any one of the four signal bandwidths included in the first bandwidth set, and the terminal transmits the first uplink signal on the first uplink channel by using the configured or indicated signal bandwidth. Similarly, the access network device may configure or indicate, for or to the terminal, any one of the five signal bandwidths included in the second bandwidth set, and the terminal transmits the second uplink signal on the second uplink channel by using the configured or indicated signal bandwidth.

It may be understood that the maximum transmission bandwidth of the first uplink signal and the maximum transmission bandwidth of the second uplink signal need to be less than or equal to the maximum transmission bandwidth of the terminal. For example, the first channel bandwidth of the terminal is 180 kHz, and the maximum transmission bandwidth of the terminal is 160 kHz. The first bandwidth set of the first uplink signal configured by the access network device for the terminal or the second bandwidth set of the second uplink signal configured by the access network device for the terminal may include 15 kHz, 30 kHz, 60 kHz, 120 kHz, and 150 kHz. It can be learned that the maximum signal bandwidth in the bandwidth set is 150 kHz, and is less than the maximum transmission bandwidth of 160 kHz of the terminal.

Optionally, between step 310 and step 320, the method may further include: Step 330: The access network device sends a first downlink signal to the terminal on a first downlink channel. The terminal receives the first downlink signal from the access network device on the first downlink channel.

In a design, the first downlink signal includes frequency adjustment information. For example, the frequency adjustment information of the first uplink signal and the frequency adjustment information of the first uplink signal include one or more of the following: a frequency error of the first uplink signal, a maximum value of the frequency error of the first uplink signal, a frequency adjustment command of the second uplink signal, or a frequency adjustment value of the second uplink signal. An example in which the access network device determines the frequency error of the first uplink signal is used. When receiving the first uplink signal, the access network device may determine a frequency of the first uplink signal through detection. The access network device compares the detected frequency of the first uplink signal with an indicated or configured frequency of the first uplink signal, to obtain a frequency difference between the two frequencies, to determine the frequency error of the first uplink signal. The frequency of the first uplink signal may be a frequency range of the first uplink signal, a center frequency of the first uplink signal, a start frequency or a cut-off frequency of the first uplink signal, or the like. In other words, in this embodiment of this application, the access network device determines the frequency error of the first uplink signal by comparing two frequency ranges of the first uplink signal. Alternatively, the access network device may determine the frequency error of the first uplink signal by comparing two center frequencies of the first uplink signal. Alternatively, the access network device may determine the frequency error of the first uplink signal by comparing start frequencies or cut-off frequencies of the first uplink signal. An example in which the access network device determines the frequency error of the first uplink signal by comparing the two frequency ranges of the first uplink signal is used. For example, the signal bandwidth that is of the first uplink signal and that is indicated or configured by the access network device is 15 kHz, and the frequency range of the first uplink signal is 920 MHz to 920.015 MHz. When receiving the first uplink signal, the access network device detects that the frequency range of the first uplink signal is 920.015 MHz to 920.030 MHz, and may determine that the frequency error of the first uplink signal is +15 kHz. It may be understood that, if a determined value of the frequency error of the first uplink signal is a positive value, it indicates that the frequency of the received first uplink signal deviates from the indicated or configured frequency of the first uplink signal in a direction in which the frequency increases. On the contrary, if the determined value of the frequency error of the first uplink signal is a negative value, it indicates that the frequency of the received first uplink signal deviates from the indicated or configured frequency of the first uplink signal in a direction in which the frequency decreases.

In a design, the terminal may obtain the frequency adjustment information from the first downlink signal. The terminal performs frequency adjustment based on the frequency adjustment information. After the frequency adjustment, the terminal sends the second uplink signal to the access network device on the second uplink channel. For example, the terminal may adjust a frequency oscillator of the terminal based on the frequency error of the first uplink signal. Compared with the frequency error of the terminal obtained before the adjustment, the frequency error of the terminal obtained after the adjustment decreases. Therefore, a second downlink signal can support a larger maximum signal bandwidth than the first downlink signal. For example, within a channel of the terminal, the maximum signal bandwidth that can be configured for the first uplink signal is 150 kHz, and in a frequency band whose carrier center frequency is 900 MHz, the frequency error of the first uplink signal is approximately 20 ppm, and the frequency error of the first uplink signal is 18 kHz. The terminal may obtain, from the first downlink signal, the frequency error that is 20 ppm and that is of the first uplink signal. The terminal performs frequency adjustment, and the frequency error of the terminal obtained after the adjustment is approximately 5 ppm. In this case, a frequency error of the second uplink signal is 4.5 kHz. A maximum signal bandwidth that can be configured for the second uplink signal may be 170 kHz, and is greater than the maximum signal bandwidth that is 150 kHz and that can be configured for the first uplink signal.

### Example 1

In a random access scenario, the method in the procedure in FIG. 3 may be applied. Four-step random access is used as an example, and a four-step random access procedure of a terminal includes the following steps.

Step 1: The terminal sends a message 1 on a physical random access channel (physical random access channel, PRACH), where the message 1 is a random access preamble (preamble). Optionally, the random access preamble may also be referred to as a random access preamble sequence.

In a design, the first uplink signal in the procedure in FIG. 3 may be a signal that carries the message 1.

Step 2: An access network device sends a message 2 on a physical downlink shared channel (physical downlink shared channel, PDSCH), where the message 2 may be referred to as a random access response (random access response, RAR).

In a design, the first downlink signal in the procedure in FIG. 3 may be a signal that carries the message 2. The message 2 may carry frequency adjustment information. The terminal may perform frequency adjustment based on the frequency adjustment information.

Step 3: The terminal sends a message 3 to the access network device on a physical uplink shared channel (physical uplink shared channel, PUSCH).

In a design, if the message 2 carries the frequency adjustment information, an uplink signal that carries the message 3 may be referred to as a second uplink signal. A maximum signal bandwidth of the uplink signal that carries the message 3 is greater than a maximum signal bandwidth of the uplink signal that carries the message 1.

Step 4: The access network device sends a message 4 to the terminal on the PDSCH, where the message 4 may be referred to as a contention resolution message.

In a design, the first downlink signal in the procedure in FIG. 3 may be a signal that carries the message 4. The message 4 may carry the frequency adjustment information. The terminal may perform frequency adjustment based on the frequency adjustment information.

According to step 1 to step 4, after the terminal successfully performs random access, the access network device may schedule the terminal to send, on the PUSCH, a 1^{st} uplink signal to the access network device, where the 1^{st} uplink signal may carry a message 5. In other words, for example, a message carried in the 1^{st} uplink signal sent after the terminal successfully performs random access may be referred to as the message 5, or a 1^{st} uplink message sent after the terminal successfully performs random access may be referred to as the message 5. If the message 4 carries the frequency adjustment information, the uplink signal that carries the message 5 may be referred to as the second uplink signal in the procedure in FIG. 3, and a maximum signal bandwidth corresponding to the second uplink signal may be greater than the maximum signal bandwidth of the first uplink signal. In this case, the first uplink signal may be an uplink signal that carries the message 1, or an uplink signal that carries the message 3. In other words, a maximum signal bandwidth of the uplink signal that carries the message 5 is greater than a maximum signal bandwidth of the uplink signal that carries the message 1 or the message 3.

The foregoing four-step random access procedure is summarized, and the following may be obtained. In a design, an uplink signal that carries the message 1 may be referred to as the first uplink signal. Optionally, a downlink signal that carries the message 2 may be referred to as the first downlink signal, and the first downlink signal carries the frequency adjustment information. The terminal may perform frequency adjustment based on the frequency adjustment information. Then, an uplink signal that carries the message 3 may be referred to as the second uplink signal. Alternatively, an uplink signal that carries a message (for example, the message 5) after the message 3 may be referred to as the second uplink signal. In this case, the maximum signal bandwidth of the second uplink signal that carries the message 3 or the message 5 is greater than the maximum signal bandwidth of the first uplink signal that carries the message 1. The first uplink channel is a PRACH, and the second uplink channel is a PUSCH or a PUCCH.

Alternatively, in a design, an uplink signal that carries the message 3 may be referred to as the first uplink signal. A downlink signal that carries the message 4 may be referred to as the first downlink signal, and the first downlink signal includes the frequency adjustment information. The terminal may perform frequency adjustment based on the frequency adjustment information. An uplink signal after the message 3 may be referred to as the second uplink signal. For example, the second uplink signal may be an uplink signal that carries an acknowledgment (acknowledgment, ACK) or a negative acknowledgment (negative acknowledgment, NACK) of the message 4, or an uplink signal that carries the message 5. In this case, the maximum signal bandwidth of the second uplink signal that carries the ACK or the NACK of the message 4 or that carries the message 5 is greater than the maximum signal bandwidth of the first uplink signal that carries the message 3. The first uplink channel is a PUSCH. In addition, when the second uplink signal is an uplink signal that carries the message 4, the second uplink channel is a PUCCH. Alternatively, when the second uplink signal is an uplink signal that carries the message 5, the second uplink channel is a PUSCH.

Certainly, in an implementation, a first bandwidth set may be configured for the first uplink signal, and a second bandwidth set may be configured for the second uplink signal. The access network device may configure or indicate the terminal to send the first uplink signal within one signal bandwidth included in the first bandwidth set. The access network device may configure or indicate the terminal to send the second uplink signal within one signal bandwidth included in the second bandwidth set. A maximum signal bandwidth included in the second bandwidth set is greater than a maximum signal bandwidth included in the first bandwidth set.

### Example 2

In a random access scenario, the method in the procedure in FIG. 3 may be applied. Two-step random access is used as an example, and the two-step random access of the terminal includes the following steps.

Step 1: The terminal sends a message A to an access network device. In an implementation, the message A includes a message 1 and a message 3 in a four-step random access procedure. In an implementation, the terminal sends a random access preamble to the access network device on a PRACH, and sends data to the access network device on a PUSCH.

In a design, the first uplink signal in the procedure in FIG. 3 may be a signal that carries the message A, and the first uplink channel may be a PRACH or a PUSCH.

Step 2: The access network device sends a message B to the terminal on a PDSCH. In an implementation, the message B includes a message 2, a message 4, and the like in the four-step random access procedure.

In a design, the first downlink signal in the procedure in FIG. 3 may be a signal that carries the message B, and the message B may include frequency adjustment information. The first downlink channel may be the PDSCH. The terminal may perform frequency adjustment based on the frequency adjustment information. After the terminal successfully performs random access, a 1^{st} uplink signal sent by the terminal to the access network device carries a message 5, an uplink signal that carries the message 5 may be referred to as a second uplink signal, and the second uplink channel may be a PUSCH. A maximum signal bandwidth of the second uplink signal is greater than a maximum signal bandwidth of the first uplink signal. In other words, a maximum signal bandwidth of the uplink signal that carries the message 5 is greater than a maximum signal bandwidth of the uplink signal that carries the message A.

Certainly, in this embodiment of this application, a first bandwidth set may be configured for the first uplink signal that carries the message A, and a second bandwidth set may be configured for the second uplink signal that carries the message 5. A maximum signal bandwidth in the second bandwidth set is greater than a maximum signal bandwidth in the first bandwidth set. The access network device may configure or indicate the terminal to send the first uplink signal in one signal bandwidth in the first bandwidth set. The access network device may configure or indicate the terminal to send the second uplink signal in one signal bandwidth in the second bandwidth set.

### Example 3

In an asynchronous system, the method in the procedure in FIG. 3 may be applied. In the asynchronous system, before a terminal sends a data signal to an access network device, the terminal needs to first send a synchronization signal or a reference signal to the access network device. The synchronization signal or the reference signal is used by the access network device to perform time synchronization with the terminal. In other words, the terminal may first send the synchronization signal or the reference signal to the access network device, and then the terminal sends the data signal to the access network device. In a design, the first uplink signal in the foregoing procedure in FIG. 3 may be the synchronization signal or the reference signal, and a second uplink signal may be a signal that carries uplink data information or a signal that carries uplink control information. The synchronization signal or the reference signal is a synchronization signal or a reference signal of the second uplink signal. Alternatively, this may be described as the synchronization signal or the reference signal being associated with the second uplink signal. In addition, the synchronization signal or the reference signal is used by the access network device to perform time synchronization with the terminal. A maximum signal bandwidth of the data signal is greater than a maximum signal bandwidth of the synchronization signal or the reference signal. In an implementation, the synchronization signal or the reference signal is transmitted on a PUSCH, and the second uplink signal may be transmitted on a PUSCH or a PUCCH. In other words, the first uplink channel in the procedure in FIG. 3 may be the PUSCH, and the second uplink channel may be the PUCCH or the PUSCH. According to the foregoing design, a reference signal or a synchronization signal having shorter transmission duration is detected and frequency adjustment is performed, so that transmission efficiency and frequency domain resource utilization can be further improved when an uplink data signal having potentially longer transmission duration is transmitted subsequently.

In a design, after the terminal sends the synchronization signal or the reference signal and before the terminal sends the second uplink signal, the method further includes: The terminal receives a first downlink signal from the access network device on a first downlink channel, where the first downlink signal includes frequency adjustment information. The first downlink signal may be a data signal or a control signal, and the first downlink channel may be a PDSCH, a physical downlink control channel (physical downlink control channel, PDCCH), or the like. This is not limited. For example, in an implementation, the terminal sends the synchronization signal or the reference signal to the access network device on the PUSCH. The access network device performs time synchronization with the terminal based on the synchronization signal or the reference signal. The access network device determines the frequency adjustment information based on the synchronization signal or the reference signal. The access network device sends the first downlink signal to the terminal on the first downlink channel, where the first downlink signal includes the frequency adjustment information, and the first downlink channel may be a PDSCH, a PDCCH, or the like. The terminal performs frequency adjustment on a frequency oscillator of the terminal based on the frequency adjustment information. Through the adjustment, a maximum value of a frequency error of the terminal obtained after the adjustment is less than the maximum value of the frequency error of the terminal obtained before the adjustment. Then, the terminal sends the second uplink signal to the access network device on the PUSCH. A maximum signal bandwidth of the second uplink signal is greater than the maximum signal bandwidth of the synchronization signal or the reference signal.

Certainly, in this embodiment of this application, a first bandwidth set may be configured for the synchronization signal or the reference signal, and a second bandwidth set may be configured for the second uplink signal. A maximum signal bandwidth in the second bandwidth set is greater than a maximum signal bandwidth in the first bandwidth set.

In a design, the terminal or the access network device may determine the maximum signal bandwidth of the first uplink signal and the maximum signal bandwidth of the second uplink signal based on a type of the terminal. The maximum signal bandwidth of the second uplink signal is greater than the maximum signal bandwidth of the first uplink signal. In an implementation, the terminal or the access network device may determine a maximum transmission bandwidth of the terminal based on the type of the terminal. For a process of determining the maximum transmission bandwidth of the terminal based on the type of the terminal and descriptions of the terminal type, refer to the descriptions in Embodiment 1. The terminal or the access network device may determine the maximum signal bandwidth of the first uplink signal and the maximum signal bandwidth of the second uplink signal based on the maximum transmission bandwidth of the terminal. The maximum signal bandwidth of the first uplink signal and the maximum signal bandwidth of the second uplink signal are less than or equal to the maximum transmission bandwidth of the terminal.

Certainly, in this embodiment of this application, a first bandwidth set may be configured for the first uplink signal, and a second bandwidth set may be configured for the second uplink signal. A maximum signal bandwidth in the first bandwidth set is referred to as the maximum signal bandwidth of the first uplink signal, and a maximum signal bandwidth in the second bandwidth set is referred to as the maximum signal bandwidth of the second uplink signal. In a description, the first bandwidth set and the second bandwidth set may be configured based on the maximum transmission bandwidth of the terminal. Certainly, any signal bandwidth included in the first bandwidth set and the second bandwidth set needs to be less than or equal to the maximum transmission bandwidth of the terminal.

In an implementation, the access network device and the terminal each perform the following process: determining the maximum transmission bandwidth of the terminal based on the type of the terminal, and determining the first bandwidth set, the second bandwidth set, and the like based on the maximum transmission bandwidth of the terminal. It may be understood that, in this case, the first bandwidth set and the second bandwidth set that are determined by the access network device and the terminal respectively need to be the same. Alternatively, the access network device may perform the foregoing process to determine the first bandwidth set and the second bandwidth set. The access network device configures or indicates, for or to the terminal, the first bandwidth set and the second bandwidth set. Alternatively, the terminal may perform the foregoing process to determine the first bandwidth set and the second bandwidth set based on the type of the terminal. The terminal reports the first bandwidth set and the second bandwidth set to the access network device and the like. It may be understood that the foregoing descriptions of determining the first bandwidth set and the second bandwidth set based on the maximum transmission bandwidth of the terminal may be replaced with: determining the maximum signal bandwidth of the first uplink signal and the maximum signal bandwidth of the second uplink signal based on the maximum transmission bandwidth of the terminal.

In a design, the terminal may report the type of the terminal to the access network device. For example, the terminal may send a message to the access network device, where the message includes the type of the terminal. The type of the message is not limited. For example, the message may be a message 1 or a message 3 in a four-step random access procedure, or a message A in a two-step random access procedure. The access network device may receive the message from the terminal, and obtain the type of the terminal from the message. Alternatively, the terminal may implicitly report the type of the terminal to the access network device by using other information that has an association relationship with the terminal type. For example, there may be an association relationship between a random access preamble and the type of the terminal. For example, when the type of the terminal is a type 1, in a random access procedure, the terminal reports, to the access network device, a random access preamble associated with the type 1. The access network device may determine, based on the received random access preamble, that the type of the terminal is the type 1. Alternatively, there may be an association relationship between a random access resource and the type of the terminal. For example, when the type of the terminal is a type 2, the terminal may send a random access preamble to the access network device by using a random access resource associated with the type 2. The access network device may determine, based on the random access resource for receiving the random access preamble, that the type of the terminal is the type 2.

It may be understood that, in the descriptions of this application, the maximum signal bandwidth may also be referred to as a configurable maximum signal bandwidth, a maximum signal bandwidth that can be configured, an indicated maximum signal bandwidth, or a maximum signal bandwidth that can be indicated. In addition, the maximum signal bandwidth may also be referred to as a maximum signal bandwidth in a configurable maximum signal bandwidth set or a maximum signal bandwidth in an indicated maximum signal bandwidth set.

According to the foregoing design, maximum signal bandwidths configured for different uplink signals are different. For example, the terminal first sends the first uplink signal, and then sends the second uplink signal. The maximum signal bandwidth configured for the second uplink signal is greater than the maximum signal bandwidth configured for the first uplink signal. Compared with a design in which the maximum signal bandwidth configured for the second uplink signal is the same as the maximum signal bandwidth configured for the first uplink signal, transmission efficiency and frequency domain resource utilization of different uplink transmission phases, different uplink channels, and uplink transmission of different uplink signals can be improved.

### Embodiment 3

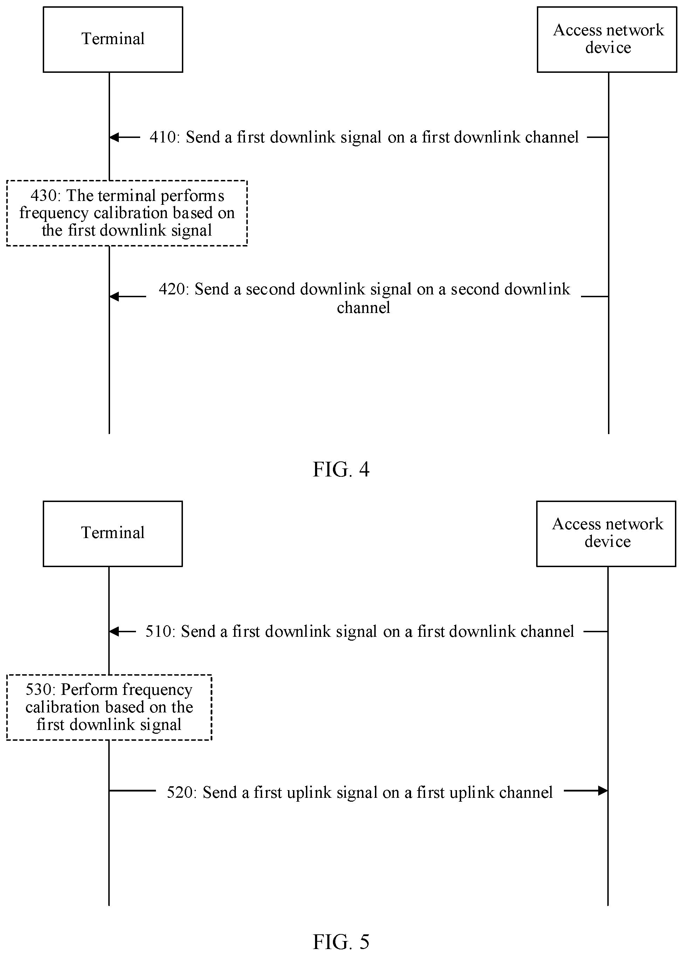

A solution in Embodiment 3 is mainly used to compare maximum signal bandwidths of two downlink signals. For example, a terminal first receives a first downlink signal from an access network device, and then receives a second downlink signal from the access network device, where a maximum signal bandwidth of the second downlink signal is greater than a maximum signal bandwidth of the first downlink signal. This is mainly based on the following consideration: When receiving the first downlink signal, the terminal may perform frequency calibration based on the first downlink signal. After the frequency calibration, a frequency error of the terminal in receiving a signal decreases. Therefore, subsequently, the maximum signal bandwidth supported by the second downlink signal that is sent by the access network device to the terminal may be larger. Compared with a case in which the second downlink signal and the first downlink signal are configured with a same maximum signal bandwidth, transmission efficiency and frequency domain resource utilization of different downlink transmission phases, different downlink channels, and different downlink signals can be improved. Especially when a modulation scheme with low power consumption and low spectral efficiency is used in a downlink, increasing an effective signal bandwidth can more effectively improve transmission efficiency. As shown in FIG. 4, a procedure is provided, and includes at least the following steps.

Step 410: The access network device sends the first downlink signal to the terminal on a first downlink channel. The terminal receives the first downlink signal from the access network device on the first downlink channel.

Step 420: The access network device sends the second downlink signal to the terminal on a second downlink channel. The terminal receives the second downlink signal from the access network device on the second downlink channel.

In a design, a first bandwidth set is configured for the first downlink signal, and a second bandwidth set is configured for the second downlink signal. The first bandwidth set and the second bandwidth set include at least one signal bandwidth. A maximum signal bandwidth of a first uplink signal may be a maximum signal bandwidth in the first bandwidth set, and a maximum signal bandwidth of a second uplink signal may be a maximum signal bandwidth in the second bandwidth set. In an implementation, the access network device may configure or indicate the terminal to receive the first downlink signal in one signal bandwidth in the first bandwidth set. The access network device may configure or indicate the terminal to receive the second downlink signal in one signal bandwidth in the second bandwidth set. A value relationship between the signal bandwidth for transmitting the first downlink signal and the signal bandwidth for transmitting the second downlink signal is not limited.

In a design, between step 410 and step 420, the method further includes: Step 430: The terminal performs frequency calibration based on the first downlink signal. For example, in an implementation, when receiving the first downlink signal, the terminal may determine a frequency of the first downlink signal through detection. The access network device compares the detected frequency of the first downlink signal with an indicated or configured frequency of the first downlink signal, to obtain information about a frequency difference between the two frequencies, to determine a frequency error of the first downlink signal. The terminal performs frequency adjustment based on the frequency error of the first downlink signal. After the frequency adjustment, the terminal sends the second downlink signal to the access network device. Because the frequency error of the terminal decreases after the frequency adjustment, the maximum signal bandwidth supported by the second uplink signal is greater than the maximum signal bandwidth supported by the first uplink signal. In an implementation, a maximum value of the frequency error of the first uplink signal obtained before the adjustment is referred to as a first value, a maximum value of the frequency error of the second uplink signal obtained after the adjustment is referred to as a second value, and the second value is less than the first value.

### Example 1

In a design, the first downlink signal is used for at least one of the following: time synchronization, frequency synchronization, or carrying a system message. For example, when the first downlink signal is used for time synchronization, the first downlink signal may be a synchronization signal (synchronization signal, SS) or a time synchronization signal (time SS, TSS). When the first downlink signal is used for frequency synchronization, the first downlink signal may be a synchronization signal or a frequency synchronization signal (frequency SS, FSS). When the first downlink signal is used for time synchronization and frequency synchronization, the first downlink signal may be a synchronization signal, and the synchronization signal is used for both time synchronization and frequency synchronization. Further, the synchronization signal may be a primary synchronization signal (primary synchronization signal, PSS) or a secondary synchronization signal (secondary synchronization signal, SSS). This is not limited. When the first downlink signal is used for carrying a system message, the first downlink signal may be a master information block (master information block, MIB), a system information block (system information block, SIB), or the like. In an implementation, the first downlink channel may be a physical broadcast channel (physical broadcast channel, PBCH). The second downlink signal includes a signal that carries downlink data information, or a signal that carries downlink control information. The second downlink channel may be a PDSCH or a PDCCH.

For example, the first downlink signal is a synchronization signal, the first downlink channel is a PBCH, the second downlink signal is a downlink data signal or a downlink control signal, and the second downlink channel is a PDSCH or a PDCCH. The synchronization signal corresponds to the first bandwidth set, and the downlink data signal or the downlink control signal corresponds to the second bandwidth set. The access network device may select one signal bandwidth from the first bandwidth set, and send the synchronization signal to the terminal on the PBCH by using the selected signal bandwidth. In addition, the access network device may configure or indicate, for or to the terminal, the signal bandwidth. The terminal receives the synchronization signal on the PBCH by using the configured or indicated signal bandwidth. After receiving the synchronization signal, the terminal may perform frequency calibration based on the synchronization signal. After the frequency calibration, the maximum value of the frequency error of the terminal decreases. Therefore, the maximum signal bandwidth in the second bandwidth set is greater than the maximum signal bandwidth in the first bandwidth set. Then, the access network device may select one signal from the second bandwidth set, and send the data signal or the control signal to the terminal on the PDSCH or the PDCCH by using the selected signal bandwidth. In addition, the access network device may configure or indicate, for or to the terminal, the signal bandwidth. The terminal receives, by using the configured or indicated signal bandwidth, the data signal on the PDSCH, or receives the control signal on the PDCCH.

In the foregoing design, frequency error calibration is performed on a common signal that can be periodically sent, so that transmission efficiency and frequency domain resource utilization can be further improved when a downlink data signal and a control signal are subsequently performed.

### Example 2

In a design, the first downlink signal is a synchronization signal or a reference signal, and the first downlink channel may be a PDSCH. The second downlink signal may be a signal that carries downlink data information or carries downlink control information, and a second downlink channel may be a PDSCH or a PDCCH. The synchronization signal or the reference signal is a synchronization signal or a reference signal of the second downlink signal, or the synchronization signal or the reference signal is associated with the second downlink signal, or the synchronization signal or the reference signal is used for synchronization between the terminal and the access network device.

In an asynchronous system, to ensure time synchronization between the access network device and the terminal, before the access network device sends a data signal to the terminal, the access network device needs to first send the synchronization signal or the reference signal to the terminal. For example, in an implementation, the access network device sends the synchronization signal or the reference signal to the terminal. When receiving the synchronization signal or the reference signal, the terminal may perform frequency calibration on the terminal based on the synchronization signal or the reference signal. After the frequency calibration, the frequency error of the terminal decreases. Therefore, subsequently, a maximum signal bandwidth supported by the data signal sent by the access network device to the terminal is greater than a maximum signal bandwidth supported by the synchronization signal or the reference signal.

In the foregoing design, frequency error calibration is performed on a common signal that can be sent together with the data signal, so that transmission efficiency and frequency domain resource utilization can be further improved when a downlink data signal and a control signal are subsequently performed.

In a design, the access network device or the terminal may each determine a maximum signal bandwidth of the first downlink signal and a maximum signal bandwidth of the second downlink signal based on a type of the terminal. Certainly, the maximum signal bandwidth of the first downlink signal and the maximum signal bandwidth of the second downlink signal that are determined by the access network device need to be aligned with the maximum signal bandwidth of the first downlink signal and the maximum signal bandwidth of the second downlink signal that are determined by the terminal. Alternatively, the access network device may determine the maximum signal bandwidth of the first downlink signal and the maximum signal bandwidth of the second downlink signal based on the type of the terminal, and configure or indicate, for or to the terminal, the determined maximum signal bandwidth of the first downlink signal and the determined maximum signal bandwidth of the second downlink signal. Alternatively, the terminal may determine the maximum signal bandwidth of the first downlink signal and the maximum signal bandwidth of the second downlink signal based on the type of the terminal. The terminal reports the determined maximum signal bandwidth of the first downlink signal and the determined maximum signal bandwidth of the second downlink signal to the access network device and the like. In this embodiment of this application, the descriptions of determining the maximum signal bandwidth of the first downlink signal and the maximum signal bandwidth of the second downlink signal based on the type of the terminal may be replaced with: determining the first bandwidth set of the first downlink signal and the second bandwidth set of the second downlink signal based on the type of the terminal.

In an implementation, a process of determining the maximum signal bandwidth of the first downlink signal and the maximum signal bandwidth of the second downlink signal based on the type of the terminal includes: determining a maximum transmission bandwidth of the terminal based on the type of the terminal. For descriptions of the type of the terminal and determining the maximum transmission bandwidth of the terminal based on the type of the terminal, refer to Embodiment 1. Further, a maximum transmission bandwidth of the first uplink signal and a maximum transmission bandwidth of the second uplink signal may be determined based on the maximum transmission bandwidth of the terminal. The maximum transmission bandwidth of the first uplink signal and the maximum transmission bandwidth of the second uplink signal are less than the maximum transmission bandwidth of the terminal.

In a design, the terminal may report the type of the terminal to the access network device. For example, the terminal sends a message to the access network device, where the message includes the type of the terminal. For a specific implementation in which the terminal reports the terminal type to the access network device, refer to the descriptions in Embodiment 2. Details are not described herein again.

In Embodiment 3, maximum signal bandwidths configured for different downlink signals are different. For example, the access network device first sends the first downlink signal to the terminal. When receiving the first downlink signal, the terminal may perform frequency adjustment based on the first downlink signal, so that the frequency error of the terminal decreases. Therefore, subsequently, the second downlink signal sent by the access network device to the terminal may support a larger maximum signal bandwidth. Compared with a case in which downlink signals are configured with a same maximum signal bandwidth, transmission efficiency and frequency domain resource utilization of different downlink transmission phases, different downlink channels, and different downlink signals can be improved. Especially when a modulation scheme with low power consumption and low spectral efficiency is used in a downlink, increasing an effective signal bandwidth can more effectively improve transmission efficiency.

### Embodiment 4

A solution in Embodiment 4 is mainly used to compare maximum signal bandwidths of an uplink signal and a downlink signal. When accessing a system, a terminal first receives a downlink signal. The terminal may perform frequency calibration based on the downlink signal. After the calibration, a maximum value of a frequency error of the terminal decreases. Therefore, the maximum signal bandwidth of the uplink signal may be greater than the maximum signal bandwidth of the downlink signal. Compared with a case in which the uplink signal and the downlink signal are configured with a same maximum signal bandwidth, uplink signal transmission efficiency and frequency domain resource utilization can be improved. As shown in FIG. 5, a procedure is provided, and includes the following steps.

Step 510: An access network device sends a first downlink signal to the terminal on a first downlink channel. The terminal receives the first downlink signal from the access network device on the first downlink channel.

Step 520: The terminal sends a first uplink signal to the access network device on a first uplink channel. The access network device receives the first uplink signal from the terminal on the first uplink channel. A maximum signal bandwidth corresponding to the first uplink signal may be greater than a maximum signal bandwidth corresponding to the first downlink signal.

In a design, between step 510 and step 520, the method further includes: Step 530: The terminal performs frequency calibration based on the first downlink signal. After the frequency calibration, the maximum value of the frequency error of the terminal decreases. For example, a maximum value of a frequency error of the first downlink signal is a first value, and a maximum value of a frequency error of the first uplink signal is a second value. When receiving the first downlink signal, the terminal performs frequency calibration. After the frequency calibration, the maximum value of the frequency error of the terminal decreases. Therefore, the second value may be less than the first value.

In a design, the first downlink signal may be a synchronization signal, a signal that carries a system message, a downlink data signal, a downlink control signal, or the like, and the first downlink channel may be a PBCH, a PDCCH, a PDSCH, or the like. The first uplink signal may be a random access preamble, an uplink data signal, an uplink control signal, or the like, and the first uplink channel may be a PRACH, a PUSCH, a physical uplink control channel (physical uplink control channel, PUCCH), or the like.

For example, the first downlink signal is a synchronization signal, the first downlink channel is a PBCH, the first uplink signal is an uplink data signal, and the first uplink signal is a PUSCH. The access network device sends the synchronization signal to the terminal on the PBCH. When receiving the synchronization signal on the PBCH, the terminal performs frequency calibration on the terminal based on the synchronization signal. After the frequency calibration, the maximum value of the frequency error of the terminal decreases. Then, the terminal sends the uplink data signal to the access network device on the PUSCH. Because the frequency calibration is performed, the maximum value of the frequency error of the terminal decreases. Therefore, a maximum signal bandwidth corresponding to the uplink data signal is greater than a maximum signal bandwidth corresponding to the synchronization signal.

In a design, the terminal or the access network device may determine the maximum signal bandwidth of the first downlink signal and the maximum signal bandwidth of the first uplink signal of the terminal based on a type of the terminal. The maximum signal bandwidth of the first uplink signal is greater than the maximum signal bandwidth of the first downlink signal. In an implementation, the terminal or the access network device may determine a maximum transmission bandwidth of the terminal based on the type of the terminal. For a process of determining the maximum transmission bandwidth of the terminal based on the type of the terminal and descriptions of the terminal type, refer to the descriptions in Embodiment 1. The terminal or the access network device may determine the maximum signal bandwidth of the first downlink signal and the maximum signal bandwidth of the first uplink signal based on the maximum transmission bandwidth of the terminal. The maximum signal bandwidth of the first downlink signal and the maximum signal bandwidth of the first uplink signal are less than or equal to the maximum transmission bandwidth of the terminal.

Certainly, in this embodiment of this application, a first bandwidth set may be configured for the first downlink signal, and a second bandwidth set may be configured for the first uplink signal. A maximum signal bandwidth in the first bandwidth set is referred to as the maximum signal bandwidth of the first downlink signal, and a maximum signal bandwidth in the second bandwidth set is referred to as the maximum signal bandwidth of the first uplink signal. In a description, the first bandwidth set and the second bandwidth set may be configured based on the maximum transmission bandwidth of the terminal. Certainly, any signal bandwidth included in the first bandwidth set and the second bandwidth set needs to be less than or equal to the maximum transmission bandwidth of the terminal.

In an implementation, the access network device and the terminal each perform the following process: determining the maximum transmission bandwidth of the terminal based on the type of the terminal, and determining the first bandwidth set, the second bandwidth set, and the like based on the maximum transmission bandwidth of the terminal. It may be understood that, in this case, the first bandwidth set and the second bandwidth set that are determined by the access network device and the terminal respectively need to be the same. Alternatively, the access network device may perform the foregoing process to determine the first bandwidth set and the second bandwidth set. The access network device configures or indicates, for or to the terminal, the first bandwidth set and the second bandwidth set. Alternatively, the terminal may perform the foregoing process, and the terminal reports the first bandwidth set and the second bandwidth set to the access network device and the like. It may be understood that the foregoing descriptions of determining the first bandwidth set and the second bandwidth set based on the maximum transmission bandwidth of the terminal may be replaced with: determining the maximum signal bandwidth of the first downlink signal and the maximum signal bandwidth of the first uplink signal based on the maximum transmission bandwidth of the terminal.

In a design, the terminal may report the type of the terminal to the access network device. For example, the terminal may send a message to the access network device, where the message includes the type of the terminal. The message is not limited. For a specific reporting process, refer to the descriptions in Embodiment 2.

In Embodiment 4, the maximum signal bandwidths configured for the uplink signal and the downlink signal are different. For example, the maximum signal bandwidth of the uplink signal is greater than the maximum signal bandwidth of the downlink signal. Compared with a case in which the uplink signal and the downlink signal are configured with a same maximum signal bandwidth, uplink signal transmission efficiency and frequency domain resource utilization can be improved.

In embodiments of this application, the following may be understood.
1. The focus is on describing differences between different procedures, and mutual reference may be made to descriptions of the different procedures.
2. In the procedures in FIG. 2, FIG. 3, and FIG. 4, a sequence of different steps is not limited. In addition, each procedure may include fewer steps or more steps than the schematic flowchart or the text descriptions.
3. In the procedures in FIG. 2, FIG. 3, and FIG. 4, an example in which execution bodies are the terminal and the access network device is used for description. It may be understood that, in each procedure, a function of the terminal may be implemented by the terminal, or may be implemented by a module (for example, a chip or a circuit) in the terminal. A function of the access network device may be implemented by the access network device, or may be implemented by a module (for example, a chip or a circuit) in the access network device, or may be implemented by a logical node, a logical module, or software that can implement all or a part of functions of the access network device.
4. In embodiments of this application, "(for example, the terminal) receiving a signal from (for example, the access network device)" may be understood as that a source end of the signal is the access network device, and a destination end of the signal is the terminal. This may include: The terminal directly or indirectly receives the signal from the access network device. The signal may undergo necessary processing, for example, a format change, between the source end and the destination end for signal sending. However, the destination end may understand a valid signal from the source end. A similar expression in this application may be understood similarly, and details are not described herein again.
5. The solutions in embodiments of this application may be applied not only to a scenario in which the terminal communicates with the access network device, but also to another scenario. For example, in a design, the solutions in embodiments of this application may be applied to a scenario in which a backscatter terminal communicates with a target device. The target device may be a reader (reader), a helper device (helper), a series of devices that can excite the backscatter terminal, or the like. Optionally, the reader, the helper device, or the like may be deployed in the access network device. An example in which the target device is a reader, and the backscatter terminal is referred to as a tag is used. The reader may directly communicate with the tag. For example, the reader may send an excitation signal to the tag, and the tag may send a backscatter signal to the reader under excitation of the excitation signal, where the backscatter signal carries electronic encoded information of the tag. The reader may obtain the electronic encoded information of the tag based on the backscatter signal. In this design, the excitation signal sent by the reader to the tag may be considered as a downlink signal, and the backscatter signal sent by the tag to the reader may be considered as an uplink signal. Alternatively, to increase a radio frequency identification distance, an exciter may be disposed between the tag and the reader. For example, the reader may send a control signal to the exciter, and the exciter sends an excitation signal to the tag under control of the control signal. The tag sends a backscatter signal or the like to the reader under excitation of the excitation signal. In this design, the control signal sent by the reader to the exciter and the excitation signal sent by the exciter to the tag may be referred to as downlink signals, and the backscatter signal sent by the tag to the reader may be referred to as an uplink signal. Alternatively, in another design, the solutions in embodiments of this application may be applied to a scenario in which a backscatter terminal communicates with a legacy terminal. A signal sent by the legacy terminal to the backscatter terminal may be referred to as a downlink signal, and a signal sent by the backscatter terminal to the legacy terminal is referred to as an uplink signal.
6. The terminal in Embodiment 1 to Embodiment 4 may be an IoT terminal. Because power consumption of the IoT terminal is limited, a modulation scheme that may be used for a downlink signal includes but is not limited to: on-off keying (On-Off keying, OOK), amplitude shift keying (amplitude shift keying, ASK), frequency shift keying (frequency shift keying, FSK), or sequence modulation based on orthogonal frequency division multiplexing (orthogonal frequency division multiplexing, OFDM). A modulation scheme that may be used for an uplink signal includes but is not limited to: OOK, ASK, FSK, binary phase keying (binary phase shift keying, BPSK), differential BPSK, minimum frequency shift keying (minimum frequency shift keying, MSK), Gaussian minimum frequency shift keying (Gaussian MSK, GMSK), or continuous phase modulation (continuous phase modulation, CPM). A signal format that may be used for the uplink signal includes but is not limited to: a single-carrier signal, a multi-carrier signal, a monophonic signal, or an OFDM-based monophonic signal.
7. In the descriptions of this specification, a frequency error of a terminal that has a capability of generating an uplink carrier signal is a carrier frequency error, and a frequency error of a terminal that has a capability of reflecting a downlink carrier signal and that has no capability of generating an uplink carrier is a frequency error of a signal.

In the descriptions of this specification, the terminal that has the capability of reflecting a downlink carrier signal and that has no capability of generating an uplink carrier signal may also be referred to as a terminal that has only a capability of reflecting a downlink carrier signal, a terminal that has no capability of producing an uplink carrier signal, a terminal that has no capability of generating an uplink carrier signal, or a terminal that has only a backscatter capability. In the descriptions of this specification, the terminal that has the capability of generating an uplink carrier signal may also be referred to as a terminal that has a capability of producing an uplink carrier signal.

In the foregoing embodiments provided in this application, the method provided in embodiments of this application is described from a perspective of interaction between the access network device and the terminal. To implement functions in the method provided in embodiments of this application, the access network device, the terminal, or the like may include a hardware structure and/or a software module, and implement the functions in the form of the hardware structure, the software module, or a combination of the hardware structure and the software module. Whether a function in the foregoing functions is performed by using the hardware structure, the software module, or the combination of the hardware structure and the software module depends on design constraints of particular applications of the technical solutions.

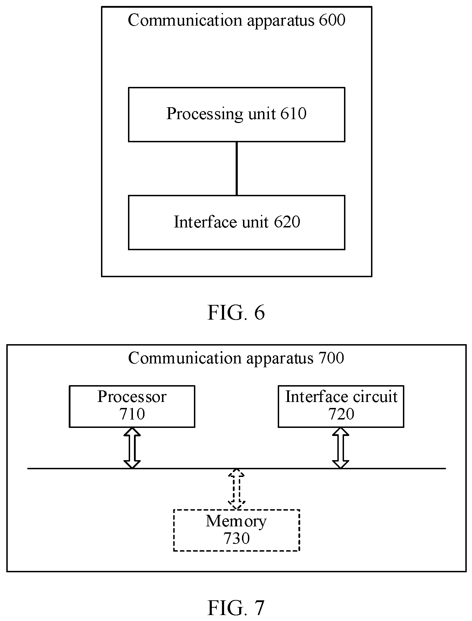

FIG. 6 and FIG. 7 are diagrams of structures of possible apparatuses according to embodiments of this application. These communication apparatuses may implement functions of the access network device or the terminal in the foregoing method embodiments. Therefore, beneficial effects of the foregoing method embodiments can also be achieved.

As shown in FIG. 6, a communication apparatus 600 includes a processing unit 610 and an interface unit 620.

For example, the processing unit 610 may also be referred to as a processor, a processing board, a processing module, a processing apparatus, or the like. The interface unit 620 may also be referred to as a transceiver, a transceiver machine, a transceiver module, a transceiver apparatus, a communication unit, or the like. Further, the interface unit 620 may include at least one of a sending unit or a receiving unit. The sending unit and the receiving unit may be integrated together, or may be two independent units, or the like.

In a design, the communication apparatus 600 is configured to implement a function of the terminal or the access network device in FIG. 2.

For example, when the communication apparatus 600 is configured to implement a function of the terminal in FIG. 2, the processing unit 610 is configured to determine a maximum transmission bandwidth of the terminal in a case of a first channel bandwidth and a first subcarrier spacing, where in a case of the first channel bandwidth and the first subcarrier spacing, the maximum transmission bandwidth of the terminal is associated with a type of the terminal, and the first channel bandwidth includes the maximum transmission bandwidth and a minimum guard bandwidth; and the interface unit 620 is configured to perform signal transmission with an access network device based on the maximum transmission bandwidth of the terminal.

When the communication apparatus 600 is configured to implement a function of the access network device in FIG. 2, the processing unit 610 is configured to determine a maximum transmission bandwidth of a terminal in a case of a first channel bandwidth and a first subcarrier spacing, where in a case of the first channel bandwidth and the first subcarrier spacing, the maximum transmission bandwidth of the terminal is associated with a type of the terminal, and the first channel bandwidth includes the maximum transmission bandwidth and a minimum guard bandwidth; and the interface unit 620 is configured to perform signal transmission with the terminal based on the maximum transmission bandwidth of the terminal.

In a design, the communication apparatus 600 is configured to implement a function of the terminal or the access network device in FIG. 3.

For example, when the communication apparatus 600 is configured to implement a function of the terminal in FIG. 3, the interface unit 620 is configured to send a first uplink signal to the access network device on a first uplink channel; and the interface unit 620 is further configured to send a second uplink signal to the access network device on a second uplink channel, where a maximum signal bandwidth of the second uplink signal is greater than a maximum signal bandwidth of the first uplink signal. Optionally, the processing unit 610 is configured to generate the first uplink signal and the second uplink signal.

When the communication apparatus 600 is configured to implement a function of the access network device in FIG. 3, the interface unit 620 is configured to receive a first uplink signal from a terminal on a first uplink channel; and the interface unit 620 is further configured to receive a second uplink signal from the terminal on a second uplink channel, where a maximum signal bandwidth of the second uplink signal is greater than a maximum signal bandwidth of the first uplink signal. Optionally, the processing unit 610 is configured to process the first uplink signal and the second uplink signal.

In a design, the communication apparatus 600 is configured to implement a function of the terminal or the access network device in FIG. 4.

For example, when the communication apparatus 600 is configured to implement a function of the terminal in FIG. 4, the interface unit 620 is configured to receive a first downlink signal from an access network device on a first downlink channel; and the interface unit 620 is further configured to receive a second downlink signal from the access network device on a second downlink channel, where a maximum signal bandwidth of the second downlink signal is greater than a maximum signal bandwidth of the first downlink signal. Optionally, the processing unit 610 is configured to process the first downlink signal and the second downlink signal.

When the communication apparatus 600 is configured to implement a function of the access network device in FIG. 4, the interface unit 620 is configured to send a first downlink signal to a terminal on a first downlink channel; and the interface unit 620 is further configured to send a second downlink signal to the terminal on a second downlink channel, where a maximum signal bandwidth of the second downlink signal is greater than a maximum signal bandwidth of the first downlink signal. Optionally, the processing unit 610 is configured to generate the first downlink signal and the second downlink signal.

In a design, the communication apparatus 600 is configured to implement a function of the terminal or the access network device in FIG. 5.

For example, when the communication apparatus 600 is configured to implement a function of the terminal in FIG. 5, the interface unit 620 is configured to receive a first downlink signal from an access network device on a first downlink channel; and the interface unit 620 is further configured to send a first uplink signal to the access network device on the first uplink channel, where a maximum signal bandwidth of the first uplink signal is greater than a maximum signal bandwidth of the first downlink signal. Optionally, the processing unit 610 is configured to generate the first uplink signal, and/or process the first downlink signal.

When the communication apparatus 600 is configured to implement a function of the access network device in FIG. 5, the interface unit 620 is configured to send a first downlink signal to a terminal on a first downlink channel; the interface unit 620 is further configured to receive the first uplink signal from the terminal on the first uplink channel, where a maximum signal bandwidth corresponding to the first uplink signal is greater than a maximum signal bandwidth corresponding to the first downlink signal. Optionally, the processing unit 610 is configured to generate the first downlink signal and/or process the first uplink signal.

For more detailed descriptions of the processing unit 610 and the interface unit 620, refer to the descriptions in the foregoing method embodiments. Details are not described herein again.

It may be understood that, in embodiments of this application, division into the units is an example, and is merely logical function division. In practical implementation, another division manner may be used. In addition, functional units in embodiments of this application may be integrated into one physical device (for example, a processor), or each functional unit may be an independent physical device, or two or more units may be integrated into one unit for implementation. The integrated unit may be implemented in a form of hardware, or implemented in a form of a software functional module, or the like.

FIG. 7 is a diagram of another structure of a communication apparatus 700 according to an embodiment of this application. For example, the communication apparatus 700 shown in FIG. 7 may be an implementation of a hardware circuit of the communication apparatus 600 shown in FIG. 6. For ease of description, FIG. 7 shows only a main part of the communication apparatus.

As shown in FIG. 7, the communication apparatus 700 includes a processor 710 and an interface circuit 720. The processor 710 and the interface circuit 720 are coupled to each other.

For example, the processor 710 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like. The interface circuit 720 may be a transceiver, an input/output circuit, or the like.

Optionally, the communication apparatus 700 may further include a memory 730, configured to store instructions executed by the processor 710, input data required by the processor 710 to run instructions, or data generated after the processor 710 runs instructions. For example, the instructions may also be referred to as a computer program, computer program code, or the like.

For example, the memory 730 may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk, a CD-ROM, or any other form of storage medium well known in the art.

When the communication apparatus 700 is configured to implement the method of the terminal or the access network device in FIG. 2, FIG. 3, FIG. 4, or FIG. 5, the processor 710 is configured to implement a function of the processing unit 610, and the interface circuit 720 is configured to implement a function of the interface unit 620.

In a design, the interface circuit 720 is configured to receive a signal from another communication apparatus other than the communication apparatus 700 and transmit the signal to the processor 710, or send a signal from the processor 710 to another communication apparatus other than the communication apparatus. The processor 710 is configured to implement a function of the terminal or the access network device in FIG. 2, FIG. 3, FIG. 4, or FIG. 5 through a logic circuit or by executing code instructions.

An embodiment of this application further provides a communication apparatus. The communication apparatus includes a processor and a memory. The processor is coupled to the memory, and the processor is configured to implement a function of the terminal or the access network device in FIG. 2, FIG. 3, FIG. 4, or FIG. 5. For example, the processor may execute instructions in the memory, so that the communication apparatus implements one or more functions in the foregoing method embodiments, for example, a function implemented by the terminal or the access network device in FIG. 2, FIG. 3, FIG. 4, or FIG. 5. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in the terminal or the access network device in FIG. 2, FIG. 3, FIG. 4, or FIG. 5. The processor and the storage medium may alternatively exist in the terminal or the access network device in FIG. 2, FIG. 3, FIG. 4, or FIG. 5 as discrete components.

An embodiment of this application further provides a communication apparatus. The communication apparatus includes a processor, and the processor is configured to implement a function of the terminal or the access network device in FIG. 2, FIG. 3, FIG. 4, or FIG. 5.

An embodiment of this application further provides a computer-readable storage medium. The computer-readable storage medium stores instructions, and the instructions may also be referred to as a computer program, computer program code, or the like. The instructions are run on a computer, so that the computer performs a function of the terminal or the access network device in FIG. 2, FIG. 3, FIG. 4, or FIG. 5 in the foregoing method embodiments.

Optionally, the computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

An embodiment of this application further provides a computer program product, including a computer program or instructions. When the computer program or instructions are run on a computer, the method of the terminal or the access network device in FIG. 2, FIG. 3, FIG. 4, or FIG. 5 is performed. For example, the computer program product includes one or more computer programs or instructions. When the computer program or the instructions are loaded and executed on the computer, all or a part of the procedures or functions of the terminal or the access network device in FIG. 2, FIG. 3, FIG. 4, or FIG. 5 in embodiments of this application are performed.

It may be understood that all or a part of the methods provided in embodiments of this application may be implemented by software, hardware, firmware, or any combination thereof. When the software is used to implement the methods, all or a part of the methods may be implemented in a form of the computer program product.

An embodiment of this application further provides a chip. The chip includes a processor. The processor is coupled to a memory. The processor is configured to execute a computer program or instructions stored in the memory, so that the chip implements a function of the terminal or the access network device in FIG. 2, FIG. 3, FIG. 4, or FIG. 5. For example, the chip implements a function of the access network device. The chip may receive information from another module (for example, a radio frequency or an antenna) in the access network device, and the information may be sent by a terminal to the access network device. Alternatively, the chip may send information to another module (for example, a radio frequency or an antenna) in the access network device. The information is sent by the access network device to a terminal.

An embodiment of this application further provides a communication system, including a first apparatus and a second apparatus.

The first apparatus may implement a function of the terminal in FIG. 2, and the second apparatus may implement a function of the access network device in FIG. 2. Alternatively, the first apparatus may implement a function of the terminal in FIG. 3, and the second apparatus may implement a function of the access network device in FIG. 3. Alternatively, the first apparatus may implement a function of the terminal in FIG. 4, and the second apparatus may implement a function of the access network device in FIG. 4. Alternatively, the first apparatus may implement a function of the terminal in FIG. 5, and the second apparatus may implement a function of the access network device in FIG. 5. For a specific structure of the first apparatus or the second apparatus, refer to the foregoing descriptions, for example, the structure descriptions in FIG. 6 or FIG. 7.

In descriptions of this application, "at least one" means one or more, and "a plurality of' means two or more. "And/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" generally represents an "or" relationship between associated objects. "Including at least one of A, B, or C" may represent: including A, including B, including C, including A and B, including A and C, including B and C, and including A, B, and C.

Numerals used in embodiments of this application are merely used for differentiation for ease of description, but do not limit the scope of embodiments of this application. Sequence numbers of the foregoing processes do not mean an execution sequence, and the execution sequence of the processes should be determined based on functions and internal logic of the processes.

It is clear that a person skilled in the art can make various modifications and variations to this application without departing from the scope of this application. In this way, this application is intended to cover these modifications and variations of this application provided that they fall within the scope of the claims of this application and their equivalent technologies.

## Claims

1. A bandwidth determining method, comprising:
determining a maximum transmission bandwidth of a terminal in a case of a first channel bandwidth and a first subcarrier spacing, wherein in a case of the first channel bandwidth and the first subcarrier spacing, the maximum transmission bandwidth of the terminal is associated with a type of the terminal, and the first channel bandwidth comprises the maximum transmission bandwidth and a minimum guard bandwidth; and
performing signal transmission with an access network device based on the maximum transmission bandwidth of the terminal.

2. The method according to claim 1, wherein the type of the terminal comprises: a terminal that has a capability of generating an uplink carrier signal, or a terminal that has a capability of reflecting a downlink carrier signal and that has no capability of generating an uplink carrier signal.

3. The method according to claim 2, wherein the terminal that has the capability of generating an uplink carrier signal comprises a terminal whose maximum value of a frequency error is equal to X and a terminal whose maximum value of the frequency error is greater than X, wherein X is a non-negative number.

4. The method according to claim 3, wherein X is equal to 0.1 parts per million ppm.

5. The method according to any one of claims 2 to 4, wherein a maximum transmission bandwidth corresponding to the terminal that has the capability of generating an uplink carrier signal is greater than a maximum transmission bandwidth corresponding to the terminal that has the capability of reflecting a downlink carrier signal and that has no capability of generating an uplink carrier signal.

6. The method according to any one of claims 3 to 5, wherein a maximum transmission bandwidth corresponding to the terminal whose maximum value of the frequency error is equal to X is greater than a maximum transmission bandwidth corresponding to the terminal whose maximum value of the frequency error is greater than X.

7. The method according to any one of claims 1 to 6, wherein the maximum transmission bandwidth of the terminal comprises a maximum downlink transmission bandwidth of the terminal and a maximum uplink transmission bandwidth of the terminal, and the maximum uplink transmission bandwidth of the terminal is greater than the maximum downlink transmission bandwidth of the terminal.

8. A bandwidth determining method, comprising:
determining a maximum transmission bandwidth of a terminal in a case of a first channel bandwidth and a first subcarrier spacing, wherein in a case of the first channel bandwidth and the first subcarrier spacing, the maximum transmission bandwidth of the terminal is associated with a type of the terminal, and the first channel bandwidth comprises the maximum transmission bandwidth and a minimum guard bandwidth; and
performing signal transmission with the terminal based on the maximum transmission bandwidth of the terminal.

9. The method according to claim 8, wherein the type of the terminal comprises: a terminal that has a capability of generating an uplink carrier signal, or a terminal that has a capability of reflecting a downlink carrier signal and that has no capability of generating an uplink carrier signal.

10. The method according to claim 9, wherein the terminal that has the capability of generating an uplink carrier signal comprises a terminal whose maximum value of a frequency error is equal to X and a terminal whose maximum value of the frequency error is greater than X, wherein X is a non-negative number.

11. The method according to claim 10, wherein X is equal to 0.1 parts per million ppm.

12. The method according to any one of claims 9 to 11, wherein a maximum transmission bandwidth corresponding to the terminal that has the capability of generating an uplink carrier signal is greater than a maximum transmission bandwidth corresponding to the terminal that has the capability of reflecting a downlink carrier signal and that has no capability of generating an uplink carrier signal.

13. The method according to any one of claims 10 to 12, wherein a maximum transmission bandwidth corresponding to the terminal whose maximum value of the frequency error is equal to X is greater than a maximum transmission bandwidth corresponding to the terminal whose maximum value of the frequency error is greater than X.

14. The method according to any one of claims 8 to 13, wherein the maximum transmission bandwidth of the terminal comprises a maximum downlink transmission bandwidth of the terminal and a maximum uplink transmission bandwidth of the terminal, and the maximum uplink transmission bandwidth of the terminal is greater than the maximum downlink transmission bandwidth of the terminal.

15. An apparatus, comprising a unit configured to implement the method according to any one of claims 1 to 7.

16. An apparatus, comprising a processor, wherein the processor is configured to execute instructions, to cause the apparatus to perform the method according to any one of claims 1 to 7.

17. An apparatus, comprising a processor and an interface circuit, wherein the interface circuit is configured to receive a signal from an apparatus other than the apparatus and transmit the signal to the processor, or send a signal from the processor to an apparatus other than the apparatus, and the processor is configured to implement the method according to any one of claims 1 to 7 by using a logic circuit or by executing code instructions.

18. An apparatus, comprising a unit configured to implement the method according to any one of claims 8 to 14.

19. An apparatus, comprising a processor, wherein the processor is configured to execute instructions, to cause the apparatus to perform the method according to any one of claims 8 to 14.

20. An apparatus, comprising a processor and an interface circuit, wherein the interface circuit is configured to receive a signal from an apparatus other than the apparatus and transmit the signal to the processor, or send a signal from the processor to an apparatus other than the apparatus, and the processor is configured to implement the method according to any one of claims 8 to 14 by using a logic circuit or by executing code instructions.

21. A computer-readable storage medium, wherein the computer-readable storage medium stores instructions, and the instructions are run on a computer, to cause the computer to perform the method according to any one of claims 1 to 7 or the method according to any one of claims 8 to 14.

22. A computer program product, comprising a computer program or instructions, wherein when the computer program or the instructions are run on an apparatus, the method according to any one of claims 1 to 7 is performed, or the method according to any one of claims 8 to 14 is performed.

23. A chip, comprising a processor, wherein the processor is coupled to a memory, and is configured to execute a computer program or instructions stored in the memory, to cause the chip to implement the method according to any one of claims 1 to 7 or the method according to any one of claims 8 to 14.

24. A system, comprising a first apparatus and a second apparatus, wherein
the first apparatus is configured to implement the method according to any one of claims 1 to 7, and the second apparatus is configured to implement the method according to any one of claims 8 to 14.
